(19) Europäisches Patentamt
European Patent Office
Office européen des brevets

(11) **EP 4 641 131 A1**

(12) **EUROPEAN PATENT APPLICATION**
published in accordance with Art. 153(4) EPC

(43) Date of publication:
**29.10.2025   Bulletin 2025/44**

(21) Application number: **24759994.7**

(22) Date of filing: **23.01.2024**

(51) International Patent Classification (IPC):
**G01B 11/06** *(2006.01)*       **G01B 11/02** *(2006.01)*
**G01B 11/26** *(2006.01)*

(52) Cooperative Patent Classification (CPC):
**G01B 11/02; G01B 11/06; G01B 11/26**

(86) International application number:
**PCT/JP2024/001839**

(87) International publication number:
**WO 2024/176687 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **20.02.2023   JP 2023024368**

(71) Applicant: **JFE Steel Corporation
Tokyo 100-0011 (JP)**

(72) Inventors:
• **TSUKAMOTO, Yusuke
  Tokyo 100-0011 (JP)**
• **HAGA, Shinichi
  Tokyo 100-0011 (JP)**

(74) Representative: **Grünecker Patent- und
Rechtsanwälte
PartG mbB
Leopoldstraße 4
80802 München (DE)**

(54) **MEASUREMENT METHOD, MEASUREMENT DEVICE, METHOD FOR MANUFACTURING OBJECT, METHOD FOR MANAGING QUALITY OF OBJECT, EQUIPMENT FOR MANUFACTURING OBJECT, COMPUTATION UNIT, IMAGING TERMINAL, IMAGING SYSTEM, AND INFORMATION PROCESSING DEVICE**

(57)    A measurement method according to the present invention includes a first step of transforming an image of an object captured together with a marker plate on which a pattern serving as a length reference for length measurement is drawn into a facing image having predetermined resolution using an image of the pattern in the image, a second step of detecting an edge of the object from the facing image, and a third step of calculating a predetermined physical quantity based on the detected edge. The second step includes a step of selecting, according to a type of the edge to be detected, a machine learning model in which the facing image is used as input data and the edge in the facing image is used as output data, a step of detecting the edge in the facing image by inputting the facing image obtained by the first step to the selected machine learning model, and a step of removing excessive detection of the edge and/or interpolating non-detection of the edge based on the connectivity of the detected edge.

FIG.2

```
        ┌──────────────────────┐
        │  PHYSICAL QUANTITY   │
        │    MEASUREMENT       │
        │     PROCESSING       │
        └──────────┬───────────┘
                   │          S1
        ┌──────────▼───────────┐
        │  IMAGING PROCESSING  │
        └──────────┬───────────┘
                   │          S2
        ┌──────────▼───────────┐
        │PROJECTIVE TRANSFORMATION│
        │      PROCESSING      │
        └──────────┬───────────┘
                   │          S3
        ┌──────────▼───────────┐
        │ DETECTION PROCESSING │
        └──────────┬───────────┘
                   │          S4
        ┌──────────▼───────────┐
        │MEASUREMENT PROCESSING│
        └──────────┬───────────┘
                   │          S5
        ┌──────────▼───────────┐
        │  DISPLAY PROCESSING  │
        └──────────┬───────────┘
                   │
             ┌─────▼─────┐
             │    END    │
             └───────────┘
```

EP 4 641 131 A1

## Description

Field

The present invention relates to a measurement method, a measurement apparatus, an object manufacturing method, an object quality control method, object manufacturing equipment, an arithmetic unit, an imaging terminal, an imaging system, and an information processing apparatus.

Background

In recent years, the API5L standard (see Non Patent Literature 1), which is a standard of steel pipes, has been revised, and the description of a steel pipe shape inspection method has been clarified. Based on this, it is expected that management of a steel pipe shape inspection will be further tightened in the future. On the other hand, there are various items of the steel pipe shape inspection and some of the items include complicated procedures. For example, offset (groove misalignment of a welded section) has to be calculated based on a measurement value of a dial gauge by bringing the dial gauge into contact with a plurality of positions on the outer surface of a steel pipe. A bend of the steel pipe has to be calculated based on floating of the steel pipe measured by, for example, stretching a leveling string in the length direction of the steel pipe.

Citation List

Non Patent Literature

Non Patent Literature 1: AMERICAN PETROLEUM INSTITUTE, API SPECIFICATION 5L FORTY-SIXTH EDITION, APRIL 2018.
Non Patent Literature 2: Xavier Soria, Edgar Riba, and Angel Sappa. "Dense Extreme Inception Network: Towards a Robust CNN Model for Edge Detection.", The IEEE Winter Conference on Applications of Computer Vision. 2020, Vol.1, p.1912-1921.

Summary

Technical Problem

As explained above, since the items and the procedures of the steel pipe shape inspection are diverse, the shape inspection largely depends on manual work of an operator in a factory. In addition, the shape inspection is performed on pluralities of surfaces and directions of the steel pipe, such as an outer surface, an inner surface, an end surface, and a length direction of the steel pipe. For this reason, a lot of time is required for the shape inspection, and it is difficult to accurately perform the shape inspection.

The present invention has been made in order to solve the problems described above, and an object of the present invention is to provide a measurement method, a measurement apparatus, an arithmetic unit, an imaging terminal, and an imaging system capable of accurately measuring a predetermined physical quantity at a predetermined position of an object in a short time. Another object of the present invention is to provide an object manufacturing method capable of improving a manufacturing yield of an object. Another object of the present invention is to provide an object quality control method capable of providing a high-quality object. Another object of the present invention is to provide object manufacturing equipment capable of improving a manufacturing yield of an object. Another object of the present invention is to provide an information processing apparatus capable of improving a manufacturing yield of an object and/or providing a high-quality object.

Solution to Problem

To solve the problem and achieve the object, [1] a measurement method according to the present invention is the measurement method for measuring a predetermined physical quantity at a predetermined position of an object. The measurement method includes: a first step of transforming an image of the object captured together with a marker plate on which a pattern serving as a length reference for length measurement is drawn, into a facing image having predetermined resolution using an image of the pattern in the image; a second step of detecting an edge of the object from the facing image; and a third step of calculating the predetermined physical quantity based on the detected edge, wherein the second step includes: a step of selecting, according to a type of the edge to be detected, a machine learning model in which the facing image is used as input data and the edge in the facing image is used as output data; a step of detecting the edge in the facing image by inputting the facing image obtained by the first step to the selected machine learning model; and an edge identification step of removing excessive detection of the edge and/or interpolating non-detection of the edge based on the connectivity of the detected edge.

[2] Moreover, the measurement method according to above [1] may further include, before the first step, an imaging step of capturing an image of the object together with the marker plate.

[3] Moreover, in the measurement method according to above [1] or [2], the edge identification step may include: a step of binarizing an image of the edge; a step of dividing the binarized image of the edge into a plurality of processing units to generate a plurality of divided binary images; a step of determining validity or invalidity of the edge in each of the divided binary images considering the edge in the divided binary images adjacent to each other; and a step of interpolating, based on the edge determined as valid, the edge determined as invalid.

[4] Moreover, a measurement apparatus according to the present invention is the measurement apparatus that measures a predetermined physical quantity at a predetermined position of an object. The measurement apparatus includes: a marker plate on which a pattern serving as a length reference for length measurement is drawn; an imaging unit that captures an image of the object together with the marker plate; and an arithmetic unit that executes processing of transforming the image into a facing image having predetermined resolution by using an image of the pattern in the captured image, processing of detecting an edge of the object from the facing image, and processing of calculating the predetermined physical quantity based on the detected edge, wherein the arithmetic unit executes, in the processing of detecting the edge, processing of selecting, according to a type of the edge to be detected, a machine learning model in which the facing image is used as input data and the edge in the facing image is used as output data, processing of detecting the edge in the facing image by inputting the facing image to the selected machine learning model, and processing of removing excessive detection of the edge and/or interpolating non-detection of the edge based on connectivity of the detected edge.

[5] Moreover, an object manufacturing method according to the present invention includes: an object manufacturing step; and a measurement step of measuring a predetermined physical quantity at a predetermined position of an object using the measurement method according to any one of above [1] to [3].

[6] Moreover, an object quality control method according to the present invention includes: a measurement step of measuring a predetermined physical quantity at a predetermined position of an object using the measurement method according to any one of above [1] to [3]; and a quality control step of performing quality control for the object from a measurement result of the predetermined physical quantity obtained by the measurement step.

[7] Moreover, an object manufacturing equipment according to the present invention includes: manufacturing equipment for manufacturing an object; and the measurement apparatus according to above [4] for measuring a predetermined physical quantity at a predetermined position of the object manufactured by the manufacturing equipment.

[8] Moreover, an arithmetic unit according to the present invention is the arithmetic unit for measuring a predetermined physical quantity at a predetermined position of an object. The arithmetic unit executes: processing of detecting an edge of the object from a facing image calculated from an image of the object captured together with a marker plate on which a pattern serving as a length reference for length measurement is drawn; and processing of calculating the predetermined physical quantity based on the detected edge, and in the processing of detecting the edge, executes: a processing of selecting, according to a type of the edge to be detected, a machine learning model in which the facing image is used as input data and the edge in the facing image is used as output data; processing of detecting the edge in the facing image by inputting the facing image to the selected machine learning model; and processing of removing excessive detection of the edge and/or interpolating non-detection of the edge based on connectivity of the detected edge.

[9] Moreover, in the arithmetic unit according to above [8], in order to calculate the facing image from an image of the object, the arithmetic unit may execute processing of transforming the image into a facing image having predetermined resolution using the pattern in the image.

[10] Moreover, an imaging terminal according to the present invention is the imaging terminal for measuring a predetermined physical quantity at a predetermined position of an object. The imaging terminal includes: an imaging unit that captures an image of the object together with a marker plate on which a pattern serving as a length reference for length measurement is drawn; and a second arithmetic unit that executes processing on the captured image, wherein the second arithmetic unit executes processing of outputting the captured image to an external first arithmetic unit that is the arithmetic unit according to claim 8 or 9, and/or is the arithmetic unit according to above [8] or [9].

[11] Moreover, an imaging system according to the present invention is the imaging system for measuring a predetermined physical quantity at a predetermined position of an object. The imaging system includes: a marker plate on which a pattern serving as a length reference for length measurement is drawn; and the imaging terminal according to above [10] that captures an image of the object on which the marker plate is installed.

[12] Moreover, an information processing apparatus according to the present invention includes a third arithmetic unit that executes, from a predetermined physical quantity at a predetermined position of an object calculated by an external first or second arithmetic unit that is the arithmetic unit according to above [8] or [9] and a plurality of kinds of information concerning the object for which the physical quantity is calculated, one or more of processing of changing a manufacturing condition of the object and processing of determining a degree of quality of the object.

[13] Moreover, an object manufacturing equipment according to the present invention includes: manufacturing equipment for manufacturing an object; and the imaging terminal according to above [10] for measuring a predetermined physical quantity at a predetermined position of the object manufactured by the manufacturing equipment. Advantageous Effects of Invention

With the measurement method, the measurement apparatus, the arithmetic unit, the imaging terminal, and the imaging system according to the present invention, it is possible to measure a predetermined physical quantity at a predetermined position of an object in a short time and with high accuracy. With the object manufacturing method according to the present invention, it is possible to improve a manufacturing yield of an object. With the object quality control method of the present invention, it is possible to provide a high-quality object. With the object manufacturing equipment according to the present invention, it is possible to improve a manufacturing yield of an object. With the information processing apparatus according to the present invention, it is possible to improve a manufacturing yield of an object and/or provide a high-quality object.

Brief Description of Drawings

FIG. 1 is a schematic diagram illustrating a configuration of a measurement apparatus according to a first embodiment of the present invention.
FIG. 2 is a flowchart illustrating a flow of physical quantity measurement processing according to the first embodiment of the present invention.
FIG. 3 is a flowchart illustrating a flow of imaging processing illustrated in FIG. 2.
FIG. 4 is a flowchart illustrating a flow of projective transformation processing illustrated in FIG. 2.
FIG. 5 is a schematic diagram illustrating an example of images of a welded section and a marker plate captured by the imaging processing.
FIG. 6 is a diagram illustrating an example of dimensions of the marker plate illustrated in FIG. 5.
FIG. 7 is a flowchart illustrating a flow of detection processing illustrated in FIG. 2.
FIG. 8 is a schematic diagram illustrating an example of an edge image obtained by processing in Step S32.
FIG. 9 is a flowchart illustrating a flow of edge identification processing illustrated in FIG. 7.
FIG. 10 is a diagram for explaining a specific example of processing in Step S334 illustrated in FIG. 9.
FIG. 11 is a diagram for explaining a specific example of processing in Step S335 illustrated in FIG. 9.
FIG. 12 is a diagram for explaining a specific example of processing in Step S336 illustrated in FIG. 9.
FIG. 13 is a diagram for explaining a specific example of processing in Step S336 illustrated in FIG. 9.
FIG. 14 is a diagram illustrating an example of an edge image obtained as a result of processing in Step S334 to Step S336 illustrated in FIG. 9.
FIG. 15 is a diagram illustrating an example of an edge image obtained as a result of processing in Step S339.
FIG. 16 is a diagram for explaining a pipe thickness, an offset, a bead height, inner surface peaking, outer surface peaking, and a bead rising angle.
FIG. 17 is a flowchart illustrating a flow of measurement processing in measuring the pipe thickness.
FIG. 18 is a flowchart illustrating a flow of measurement processing in measuring the offset and the bead height.
FIG. 19-1 is a flowchart illustrating a flow of measurement processing in measuring the inner surface peaking.
FIG. 19-2 is a flowchart illustrating a flow of measurement processing in measuring the outer surface peaking.
FIG. 19-3 is a diagram for explaining measurement processing for the outer surface peaking.
FIG. 20 is a flowchart illustrating a flow of measurement processing in measuring the bead rising angle.
FIG. 21 is a schematic diagram illustrating a configuration of a measurement apparatus according to a second embodiment of the present invention.
FIG. 22 is a block diagram illustrating a main part configuration of the measurement apparatus illustrated in FIG. 21.
FIG. 23 is a block diagram illustrating a main part configuration of a modification of the measurement apparatus illustrated in FIG. 21.
FIG. 24 is a flowchart illustrating a flow of processing of an imaging terminal and an information processing apparatus carried out by the measurement apparatus illustrated in FIG. 21.
FIG. 25 is a block diagram illustrating a main part configuration of a measurement apparatus according to a third embodiment of the present invention.
FIG. 26 is a flowchart illustrating a flow of processing of an imaging terminal and an information processing apparatus carried out by the measurement apparatus illustrated in FIG. 25.

FIG. 27 is a block diagram illustrating a main part configuration of a measurement apparatus according to a fourth embodiment of the present invention.

FIG. 28 is a flowchart illustrating a flow of processing of an imaging terminal and an information processing apparatus carried out by the measurement apparatus illustrated in FIG. 27.

FIG. 29 is a block diagram illustrating a main part configuration of a measurement apparatus according to a fifth embodiment of the present invention.

FIG. 30 is a flowchart illustrating a flow of processing of an imaging terminal, a first information processing apparatus, and a second information processing apparatus carried out by the measurement apparatus illustrated in FIG. 29.

FIG. 31 is a schematic diagram illustrating a state in which positions where a pipe thicknesses is measured are superimposed on a captured image.

FIG. 32 is a diagram illustrating a measurement result and an error range of a pipe thickness in an example.

Description of Embodiments

Hereinafter, measurement apparatuses and measurement methods thereof according to first to fifth embodiments of the present invention are explained with reference to the drawings. In the embodiments, the measurement apparatuses measure a physical quantity concerning a cross-sectional shape of a welded section of a welded steel pipe. However, the present invention is not limited to the embodiments and can be applied to processing in general of measuring a physical quantity at a predetermined position of an object in which an edge is likely to be formed. As explained in detail below, as the physical quantity concerning the cross-sectional shape of the welded section of the welded steel pipe, a pipe thickness, an offset, a bead height, inner surface peaking, outer surface peaking, and a bead rising angle can be exemplified.

[First Embodiment]

[Configuration]

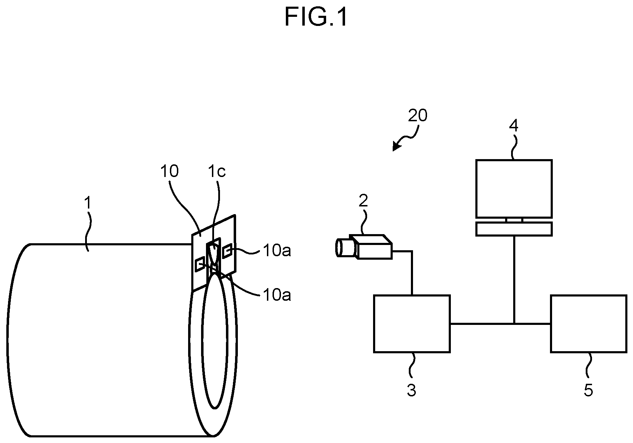

First, a configuration of a measurement apparatus according to a first embodiment of the present invention is explained with reference to FIG. 1. FIG. 1 is a schematic diagram illustrating the configuration of the measurement apparatus according to the first embodiment of the present invention. In the present embodiment, a measurement target is explained as a cross section of a welded section 1c of a welded steel pipe 1. As illustrated in FIG. 1, a measurement apparatus 20 according to the first embodiment of the present invention is a device that measures a physical quantity concerning a cross-sectional shape of the welded section 1c of the welded steel pipe 1 and includes an imaging unit 2, an arithmetic unit 3, a display unit 4, a storage unit 5, and a marker plate 10.

The imaging unit 2 is imaging means for capturing an image of the cross section of the welded steel pipe 1 and is configured by a monochrome camera or a color camera. A color camera is preferably used as the imaging unit 2. The imaging unit 2 is preferably designed so as to be able to ensure a predetermined resolution when the cross section of the welded steel pipe 1 is imaged. When an installation position of the imaging unit 2 can be changed within a predetermined range, it is preferable that the imaging unit 2 is designed to be able to ensure the predetermined resolution at all positions within the predetermined range. The image of the cross section of the welded steel pipe 1 is captured by the imaging unit 2 to include a predetermined position for measuring a predetermined physical quantity.

The arithmetic unit 3 is arithmetic means for performing image processing such as projective transformation on image data of the cross section of the welded steel pipe 1 captured by the imaging unit 2 and calculates a physical quantity concerning the cross-sectional shape of the welded section 1c. The arithmetic unit 3 is configured by a computer or the like equipped with a CPU (Central Processing Unit).

The display unit 4 is display means for displaying information including the physical quantity concerning the cross-sectional shape of the welded section 1c calculated by the arithmetic unit 3. The display unit 4 is configured by a liquid crystal display or the like. In addition to the physical quantity calculated by the arithmetic unit 3, the display unit 4 may simultaneously display the image data of the cross section of the welded steel pipe 1 captured by the imaging unit 2, image data of a result of the image processing by the arithmetic unit 3, and the like.

The storage unit 5 is storage means for storing information including the physical quantity concerning the cross-sectional shape of the welded section 1c calculated by the arithmetic unit 3. The storage unit 5 is configured by a hard disk drive or the like. The storage unit 5 may store image data of a cross section of the welded steel pipe 1 captured by the imaging unit 2, the image data of the result of the image processing by the arithmetic unit 3, and the like.

When an image of the cross section of the welded steel pipe 1 is captured by the imaging unit 2, the marker plate 10 is installed on the cross section of the welded steel pipe 1. The marker plate 10 is for realizing length measurement in the cross section of the welded steel pipe 1. A pattern 10a having a known length serving as a length reference for length measurement is drawn on the surface thereof. As the pattern 10a, it is preferable to use a square pattern, the length of one side or a plurality of sides of which is known, an AR marker (for example, Aruco), which is one or a plurality of markers for three-dimensional surveying, or the like.

The marker plate 10 is preferably attached to the cross section or the surface of the welded steel pipe 1 with a magnet or the like to be easily detachable. In order to improve the accuracy of the projective transformation explained below, the number of patterns 10a is preferably as large as possible. The welded section 1c and the pattern 10a are preferably located on the same plane as much as possible. Under a normal operation method, it is preferable that, when an image of a cross section of the welded steel pipe 1 is captured from a place where the imaging unit 2 is installed, the marker plate 10 is preferably formed in a small structure such that the entire marker plate 10 can be imaged.

In order to implement simple physical quantity measurement, the imaging unit 2, the arithmetic unit 3, and the display unit 4 may be replaced with an imaging terminal 6 having functions equivalent to those of the imaging unit 2, the arithmetic unit 3, and the display unit 4 as explained in a second embodiment and the like explained below.

[Physical quantity measurement processing]

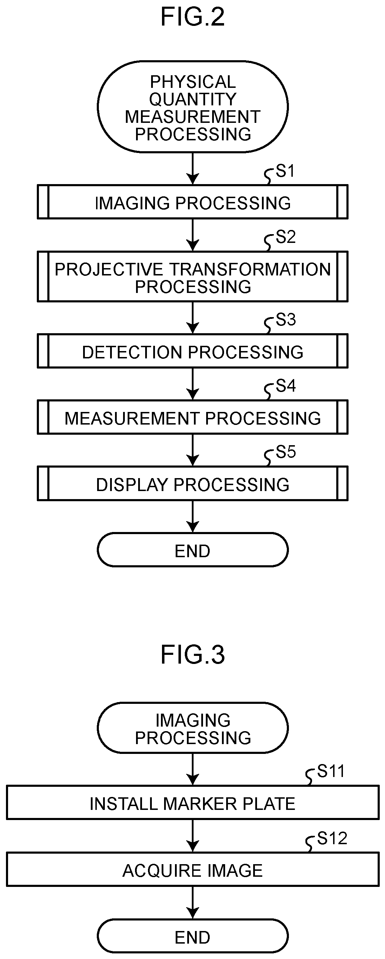

Subsequently, a flow of physical quantity measurement processing according to the first embodiment of the present invention using the measurement apparatus 20 explained above is explained with reference to FIG. 2 to FIG. 20. FIG. 2 is a flowchart illustrating a flow of physical quantity measurement processing according to the first embodiment of the present invention. The flowchart illustrated in FIG. 2 starts at timing when an execution instruction for the physical quantity measurement processing is input to the measurement apparatus 20. The physical quantity measurement processing proceeds to processing in Step S1.

In the processing in Step S1, an operator operates the imaging unit 2 to thereby capture an image of the welded section 1c including a bead section 1a of the welded steel pipe 1 on which the marker plate 10 is installed (an imaging step). The imaging unit 2 inputs image data including captured images of the welded section 1c and the marker plate 10 to the arithmetic unit 3 (imaging processing). Details of this imaging processing are explained below with reference to FIG. 3. Accordingly, the processing in Step S1 is completed and the physical quantity measurement processing proceeds to processing in Step S2.

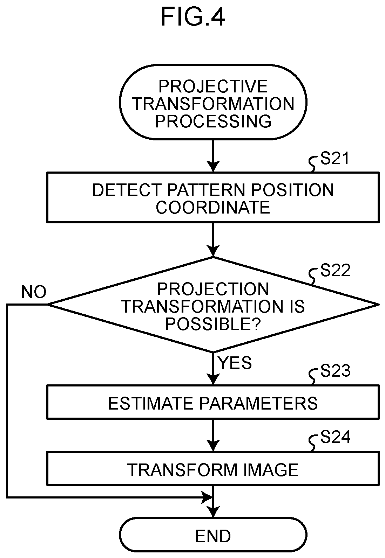

In the processing in Step S2, the arithmetic unit 3 performs projective transformation to transform the image data input from the imaging unit 2 into facing image data having predetermined resolution (projective transformation processing). Details of this projective transformation processing are explained below with reference to FIG. 4 to FIG. 6. Accordingly, the processing in Step S2 is completed and the physical quantity measurement processing proceeds to processing in Step S3.

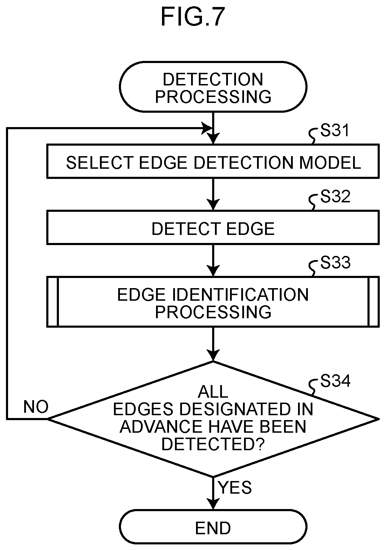

In the processing in Step S3, the arithmetic unit 3 detects an edge position of the cross section of the welded steel pipe 1 from the facing image data obtained by the processing in Step S2 (detection processing). Details of this detection processing are explained below with reference to FIG. 7 to FIG. 15. Accordingly, the processing in Step S3 is completed and the physical quantity measurement processing proceeds to processing in Step S4.

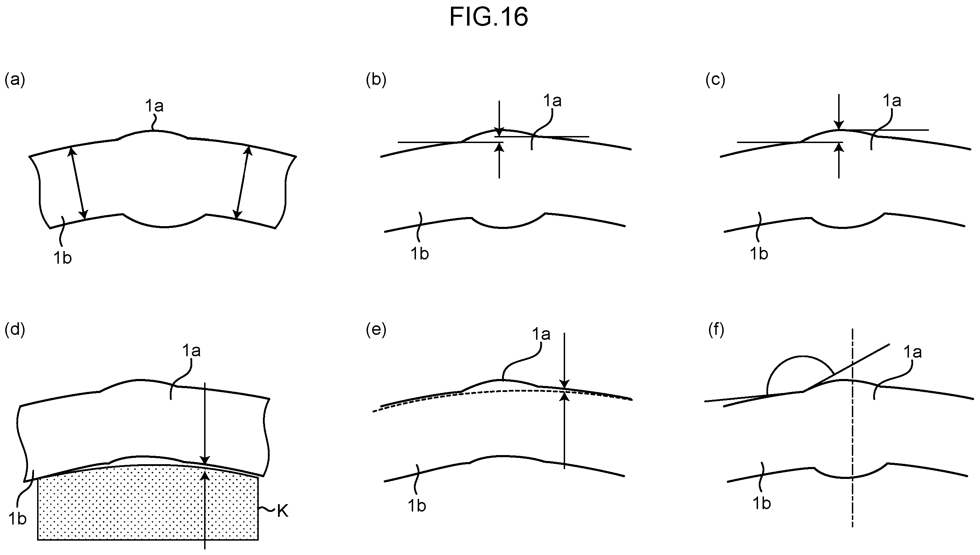

In the processing in Step S4, the arithmetic unit 3 calculates a physical quantity concerning the cross-sectional shape of the welded section 1c based on the edge position detected by the processing in Step S3 (measurement processing). Details of this measurement processing are explained below with reference to FIG. 16 to FIG. 20. Accordingly, the processing in Step S4 is completed and the physical quantity measurement processing proceeds to processing in Step S5.

In the processing in Step S5, the display unit 4 displays information including the physical quantity concerning the cross-sectional shape of the welded section 1c calculated in the processing in Step S4. The operator can change an imaging condition and the like of the image of the welded section 1c based on the information displayed on the display unit 4. Accordingly, the processing in Step S5 is completed and a series of physical quantity measurement processing ends.

<Imaging processing>

Subsequently, a flow of the imaging processing in Step S1 is explained with reference to FIG. 3. FIG. 3 is a flowchart illustrating a flow of the imaging processing illustrated in FIG. 2. The flowchart illustrated in FIG. 3 starts at timing when an execution instruction for the physical quantity measurement processing is input to the measurement apparatus 20. The imaging processing proceeds to processing in Step S11.

In the processing in step S11, the operator installs the marker plate 10 near the welded section 1c including the bead section 1a of the welded steel pipe 1. At this time, the operator preferably installs the marker plate 10 such that the welded section 1c and the pattern 10a of the marker plate 10 are located on the same plane as much as possible. Accordingly, the processing in Step S11 is completed and the imaging processing proceeds to processing in Step S12.

In the processing in Step S12, the operator operates the imaging unit 2 to thereby capture an image of the welded section 1c including the bead section 1a of the welded steel pipe 1 on which the marker plate 10 is installed. At this time, an image of the welded section 1c is captured such that a predetermined position for measuring a predetermined physical quantity is included in the image. The predetermined physical quantity is a physical quantity measured in the subsequent measurement processing (Step S4). Furthermore, it is preferable that the welded section 1c and all the patterns 10a drawn on the marker plate 10 are imaged at a time. The imaging unit 2 inputs, to the arithmetic unit 3, image data including captured images of the welded section 1c and the marker plate 10. Accordingly, the processing in Step S12 is completed and a series of imaging processing ends.

<Projective transformation processing>

Subsequently, a flow of the projective transformation processing in Step S2 explained above is explained with reference to FIG. 4 to FIG. 6. FIG. 4 is a flowchart illustrating a flow of the projective transformation processing illustrated in FIG. 2. The flowchart illustrated in FIG. 4 starts at timing when the imaging processing ends. The projective transformation processing proceeds to processing in Step S21.

In Step S21, the arithmetic unit 3 detects the position of the pattern 10a of the marker plate 10 out of the image data input from the imaging unit 2 and detects coordinates (hereinafter described as image coordinate) of the pattern 10a on an image. Here, the arithmetic unit 3 detects the positions of the patterns 10a as many as possible out of the image data and lists image coordinates of the positions (the center positions or the vertexes) of the patterns 10a that have been successfully detected.

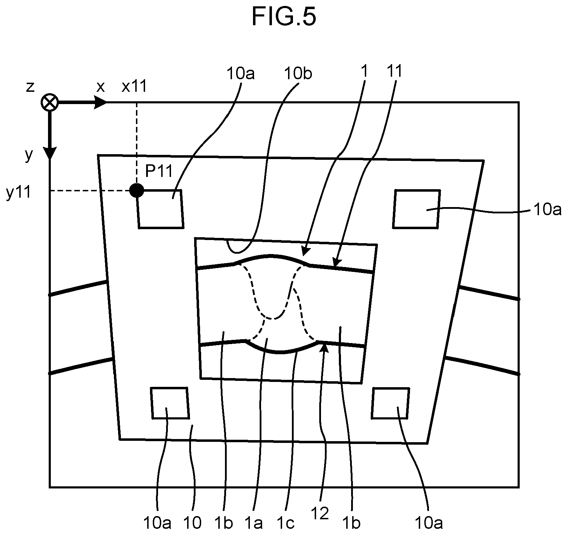

FIG. 5 is a schematic diagram illustrating an example of images of the welded section 1c and the marker plate 10 captured by the imaging processing. In the example illustrated in FIG. 5, the marker plate 10 is configured by a rectangular flat plate having a rectangular opening 10b at the center. The plurality of patterns 10a are respectively arranged near the four corners of the marker plate 10. The shape of the marker plate 10 and the positions of the patterns 10a are not limited to the shape and the positions illustrated in FIG. 5.

An image coordinate of the pattern 10a is represented by the number of pixels along axial directions with a vertex at the upper left of the image set as the origin, the image right direction set as the positive direction of the x axis, and the image downward direction set as the positive direction of the y axis. For example, when an upper left vertex P11 of the upper left pattern 10a in FIG. 5 is successfully detected, an image coordinate of the upper left vertex P11 is determined as follows. That is, starting from the origin at the upper left of the image, moving forward by x11 pixels along the x-axis direction, and moving forward by y11 pixels along the y-axis direction, the image coordinate reaches the upper left vertex P11. Therefore, the arithmetic unit 3 sets the image coordinate of the upper left vertex P11 as (x11, y11). Similarly, the arithmetic unit 3 lists, for each of all the patterns k=1, 2, ···, and K that have been successfully detected, an image coordinate (xkn, ykn) of all the center positions or vertexes Pkn (n=1, 2, ···, Nk) that have been successfully detected.

When it is desired to acquire a large number of image coordinates from a small number of patterns 10a, the shape of the patterns 10a is preferably a shape having vertexes of a rectangle or the like. On the other hand, when easiness of the detection processing and the image coordinate acquisition processing for the pattern 10a is pursued, it is preferable to set the shape of the pattern 10a as a point symmetrical shape such as a circle and detect an image coordinate at the center position of the point symmetrical shape. As the pattern 10a, a pattern for which a detection method and an image coordinate acquisition method have already been established may be used. Accordingly, the processing in Step S21 is completed and the projective transformation processing proceeds to processing in Step S22.

FIG. 4 is referred to again. In the processing in Step S22, the arithmetic unit 3 counts the number of vertexes Pkn detected in the processing in Step S21 and determines whether projective transformation is possible. In general, for the projective transformation, image coordinates and actual coordinates in a three-dimensional space need to be associated at four or more points. For this reason, when the number of detected vertexes Pkn is less than four (Step S22: No), the arithmetic unit 3 determines that the projective transformation cannot be performed, sets a flag indicating that the image transformation has failed, and then ends a series of projective transformation processing. When the projective transformation has not been successfully performed in the projective transformation processing, the physical quantity measurement processing skips the detection processing and proceeds to the measurement processing. On the other hand, when the number of detected vertexes Pkn is four or more (Step S22: Yes), the arithmetic unit 3 determines that the projective transformation is possible and advances the projective transformation processing to processing in Step S23.

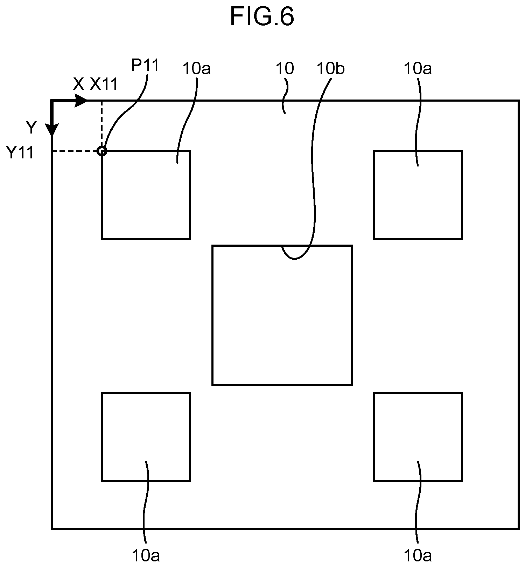

In the processing in Step S23, the arithmetic unit 3 estimates parameters of the projective transformation of the captured image data using the image coordinates of the vertexes Pkn detected in the processing in Step S21 and performs the projective transformation on the image data. Specifically, first, before estimating parameters of the projective transformation, the arithmetic unit 3 sets resolution r of the image data after the projective transformation as a parameter. At the time of the projective transformation, the arithmetic unit 3 sets in advance actual coordinates (hereinafter described as "object coordinates") of the vertexes Pkn of the pattern 10a. FIG. 6 is a diagram illustrating an example of dimensions of the marker plate 10 illustrated in FIG. 5. The shape of the marker plate 10 and the position of the pattern 10a are not limited to the shape and the position illustrated in FIG. 6.

As illustrated in FIG. 6, an object coordinate of the pattern 10a is represented by lengths (unit is, for example, [mm]) along the axial directions with the upper left of the marker plate 10 set as the origin, the right direction of the marker plate 10 set as the positive direction of the X axis, and the downward direction of the marker plate 10 set as the positive direction of the Y axis. For example, an object coordinate of the upper left vertex P11 in the upper left pattern 10a in FIG. 6 is determined as follows. That is, starting from the origin at the upper left of the marker plate 10, moving by X11 [mm] in the X-axis direction, and moving by Y11 [mm] in the Y-axis direction, the object coordinate reaches the upper left vertex P11. Therefore, the arithmetic unit 3 sets the object coordinate of the upper left vertex P11 as (X11, Y11). Similarly, the arithmetic unit 3 lists, for all patterns k=1, 2, ⋯, and K that have been successfully detected, object coordinates (Xkn, Ykn) of all center positions or vertexes Pkn (n=1, 2, ⋯, Nk) that have been successfully detected.

According to the above explanation, a correspondence relationship between the object coordinates (Xkn, Ykn) and the image coordinates (xkn, ykn) has been clarified for all the vertexes Pkn that have been successfully detected. Thus, subsequently, the arithmetic unit 3 calculates parameters of the projective transformation from the correspondence relations of the object coordinates and the image coordinates. The projective transformation is one type of image deformation processing. In the projective transformation, image data is deformed by moving an image coordinate (x, y) to a different image coordinate (x', y') according to the following Expression (1) and Expression (2). In Expression (1) and Expression (2), A, B, C, D, E, F, G, and H are parameters of the projective transformation.

$$x' = \frac{Ax + By + C}{Gx + Hy + 1} \qquad \cdots (1)$$

$$y' = \frac{Dx + Ey + F}{Gx + Hy + 1} \qquad \cdots (2)$$

When the projective transformation by appropriate parameters is applied to captured image data, a correspondence relationship between one pixel of the image data after the projective transformation and actual length, that is, the resolution r of the image data after the projective transformation can be optionally determined. If this is used, a physical quantity concerning the cross-sectional shape of the welded section can be measured on an image by applying the projective transformation on the image data obtained by imaging the welded section 1c of the welded steel pipe 1.

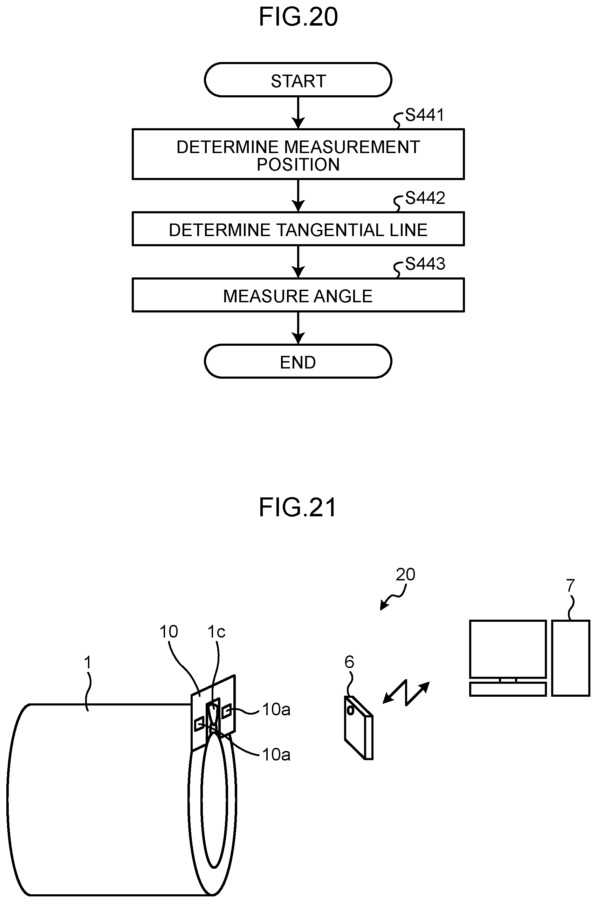

In order to calculate parameters for projective transformation, at least four or more "points" arranged on the same plane are image, and a correspondence relationship between object coordinates (X, Y) and image coordinates (x, y) of the points is acquired. In the present embodiment, the correspondence relationship between the object coordinates and the image coordinates is acquired by arranging the center position and the vertexes of the pattern 10a as determined in advance. Therefore, when the marker plate 10 is imaged using the imaging unit 2 illustrated in FIG. 1, the imaging terminal 6 illustrated in FIG. 21 explained below, or the like, it is preferable to perform imaging such that not only the welded section 1c but also the center position of the pattern 10a or four or more vertexes Pkn are fit in the image data.

The parameters of the projective transformation are calculated as follows. First, for the object coordinates (Xkn, Ykn) of all the vertexes Pkn, the arithmetic unit 3 primarily transforms the coordinates using appropriate coefficients a and constants b and c and determines coordinates (xkn', ykn') (unit is, for example, [pix]) where the vertexes Pkn should be present in the image data after the projective transformation. The primary transformation is performed according to the following Expression (3) and Expression (4).

$$xkn' = aXkn + b \qquad \cdots (3)$$

$$ykn' = aYkn + c \qquad \cdots (4)$$

The coefficient a corresponds to an inverse of the resolution r of the image data after the projective transformation. Therefore, it is preferable to set a value of the coefficient a to the inverse of r after determining the resolution r of the image data after the projective transformation in advance. The constants b and c are respectively an x coordinate and a y coordinate of the origin of an object coordinate system in the image data after the projective transformation. Therefore, in the image data after the projective transformation, it is preferable to set values of the constants b and c respectively to b=x0 and c=y0 after determining in advance a coordinate (x0, y0) to be taken by the origin of an object coordinate.

For example, a case in which the resolution r of the image data after the projective transformation is set to 0.5 [mm/pix] and the position of the origin of the object coordinate in the image data after the projective transformation is set to (0 [pix], 100 [pix]) is considered. In this case, the coefficient a only has to be set to a=1/r=1/0.5 [mm/pix] =2 [pix/mm] and the constants b and c only have to be respectively set to 0 [pix] and 100 [pix].

Subsequently, the arithmetic unit 3 calculates values of the parameters A, B, C, D, E, F, G, and H of Expression (1) and Expression (2). The arithmetic unit 3 determines the value of the parameters such that, according to Expression (1) and Expression (2), the image coordinate (xkn, ykn) of the vertex Pkn in the captured image data is transformed into a coordinate (xkn', ykn') where the vertex Pkn should be present in the image data after the projective transformation.

There are several specific calculation methods for the parameters. For example, when the number of vertexes Pkn is exactly four, if the values of the coordinates explained above are substituted in Expression (1) and Expression (2), the number of expressions and the number of unknown numbers match. Therefore, the parameters A, B, C, D, E, F, G, and H only have to be solved as simultaneous equations. When the number of vertexes Pkn is more than four, the values of the parameters A, B, C, D, E, F, G, and H may be determined using a publicly-known mathematical method such as a least squares method. A specific method of the projective transformation is not limited to the methods explained above. Accordingly, the processing in Step S23 is completed and the projective transformation processing proceeds to processing in Step S24.

FIG. 4 is referred to again. In the processing in Step S24, the arithmetic unit 3 performs the projective transformation on the image data captured in the imaging processing by using the parameters of the projective transformation estimated in the processing in Step S23. The parameters of the projective transformation are combinations of the parameters A, B, C, D, E, F, G, and H determined in the processing in Step S23. The image data after the projective transformation is generated by replacing the coordinate (x, y) in the image data before the transformation with the coordinate (x', y') calculated using Expression (1) and Expression (2) while keeping a luminance value or an RGB value in the image data before the transformation. Accordingly, the processing in Step S24 is completed and a series of projective transformation processing ends.

In the present invention, it is assumed that the welded section 1c of the welded steel pipe 1, which is a measurement target, and the marker plate 10 are present on the same plane. When the measurement target is a flat surface or a curved surface that can be regarded as a flat surface, this assumption is satisfied. Specifically, the curved surface preferably has fluctuation within approximately 2 mm with respect to a plane parallel to the surface of the marker plate 10. Usually, fluctuation in a direction parallel to a direction (a z direction illustrated in FIG. 5) perpendicular to an image plane (an xy plane illustrated in FIG. 5) cannot be measured from a two-dimensional image. For this reason, when three-dimensional measurement of the measurement target is performed, it is preferable to image the measurement target from a plurality of directions to acquire a plurality of images. On the other hand, in the present invention, under assumption that the measurement target can be regarded as a plane, measurement in a direction perpendicular to the image plane is omitted. This enables image correction by the projective transformation and simple measurement from a two-dimensional image. Depending on a measurement target, simpler measurement from one two-dimensional image is possible.

<Detection processing>

Subsequently, a flow of the detection processing in Step S3 is explained with reference to FIG. 7 to FIG. 15. FIG. 7 is a flowchart illustrating a flow of the detection processing illustrated in FIG. 2. The flowchart illustrated in FIG. 7 is started at timing when information concerning a type of a boundary line (edge) to be detected is input after the image transformation processing in Step S24 ends. The detection processing proceeds to processing in Step S31. In the present embodiment, the boundary line to be detected is designated out of, according to a physical quantity calculated in the subsequent measurement processing, a boundary line between the cross section and the outer surface of the welded steel pipe 1, a boundary line between the cross section and the inner surface of the welded steel pipe 1, and a boundary line of a chamfered section in the cross section of the welded steel pipe 1.

In the processing in Step S31, the arithmetic unit 3 selects one edge detection model used in the subsequent processing out of learned edge detection models explained in the following (1) to (3) according to a physical quantity calculated in the subsequent measurement processing. The edge detection model is a machine learning model in which the image data after the projective transformation generated by the projective transformation processing is used as input data and image data of an edge image obtained by highlighting an edge portion of the welded steel pipe 1 in the image data after the projective transformation is used as output data. The edge image is, for example, a binary image in which a non-edge portion is white and a portion estimated as an edge is black. Alternatively, the edge image is, for example, a monochrome image having 256 gradations in which a value of a probability, reliability, or the like of pixels of an input image being an edge is standardized in a range of 0 to 255 and pixel values of the pixels of the input image are replaced with the value of the probability, the reliability, or the like.

(1)A model for detecting a boundary line between the cross section and the outer surface of the welded steel pipe 1
(2)A model for detecting a boundary line between the cross section and the inner surface of the welded steel pipe 1
(3)A model for detecting a boundary line of a chamfered section in the cross section of the welded steel pipe 1 (a line indicating a boundary between a machined surface and a non-machined surface)

The edge detection model is generated by machine learning in which a plurality of pieces of teacher data including a set of image data after the projective transformation and image data of an edge image extracted from the image data are used. The edge detection model is preferably parameter information (for example, weight information obtained as a result of learning) concerning an edge detection method and edge detection processing using image processing, deep learning, or the like and is specialized for detecting an edge position of the cross section of the welded steel pipe 1. In particular, when using the deep learning, it is preferable to use deep learning having a network structure specialized for edge detection (see, for example, Non Patent Literature 2).

Since there are edges that do not need to be detected depending on a physical quantity calculated in the subsequent measurement processing, the arithmetic unit 3 may detect a predetermined minimum edge using only a part of the edge detection model. For example, when the pipe thickness is calculated in the measurement processing, all the edge detection models (1) to (3) are used. In contrast, when the offset, the bead height, the outer surface peaking, and the like are calculated in the measurement processing, it is sufficient to use only the edge detection model of (1) described above. When the inner surface peaking is calculated, it is sufficient to use only the edge detection model of (2) described above. Which edge detection model is used is determined according to information concerning a type of an edge input at the start time of the detection processing. Accordingly, the processing in Step S31 is completed and the detection processing proceeds to processing in Step S32.

In the processing in Step S32, the arithmetic unit 3 inputs the image data after the projective transformation obtained by the image transformation processing in Step S24 to the edge detection model selected in the processing in Step S31 to thereby extract an edge image in the image data after the projective transformation. The processing in Step S31 and Step S32 explained above is repeatedly executed by the number of types of boundary lines that should be detected. Accordingly, the processing in Step S32 is completed and the detection processing proceeds to processing in Step S33.

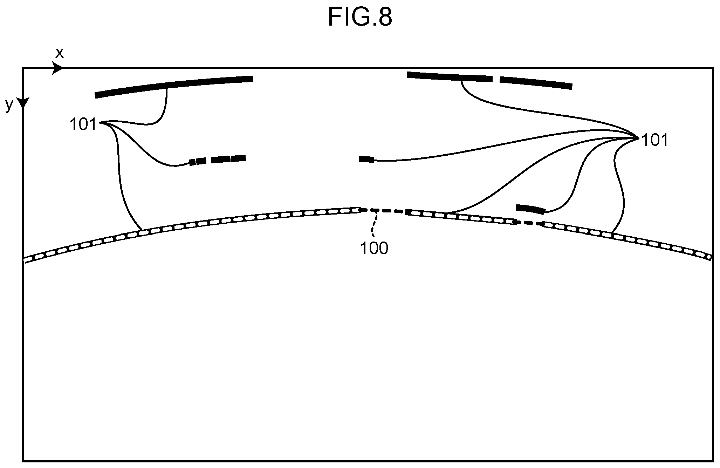

In the processing in Step S33, the arithmetic unit 3 extracts an edge position from the edge image extracted in the processing in Step S32 (edge identification processing). Details of the edge identification processing is explained below with reference to FIG. 8 to FIG. 15. Accordingly, the processing in Step S33 is completed and the detection processing proceeds to processing in Step S34.

In the processing in Step S34, the arithmetic unit 3 discriminates whether all edges designated in advance have been detected. When all the edges designated in advance have been detected as a result of the discrimination (Step S34: Yes), the arithmetic unit 3 ends a series of detection processing. On the other hand, when all the edges designated in advance have not been detected (Step S34: No), the arithmetic unit 3 returns the detection processing to the processing in Step S31.

(Edge identification processing)

Subsequently, the edge identification processing in Step S33 is explained in detail with reference to FIG. 8 to FIG. 15. FIG. 8 illustrates an example of the edge image obtained by the processing in Step S32. In FIG. 8, a broken line 100 indicates an actual edge position and a line 101 indicates a part detected as an edge in the processing in Step S32. In the processing in Step S32, it is likely that excessive detection and non-detection of edges occur depending on a property of the outer surface of the welded steel pipe 1 and a state of a background. Thus, in the edge identification processing, the arithmetic unit 3 removes the excessive detection of the edges and interpolates the non-detection of edges based the connectivity of the detected edges. In the following explanation, it is premised that the projective transformation is performed such that the edge traverses the image in the x-axis direction in the processing in Step S24 but the projective transformation may be performed such that the edge traverses the image in the y-axis direction. When the projective transformation is performed such that the edge traverses the image in the y-axis direction, an edge position can be extracted by interchanging the x axis and the y axis in the following explanation.

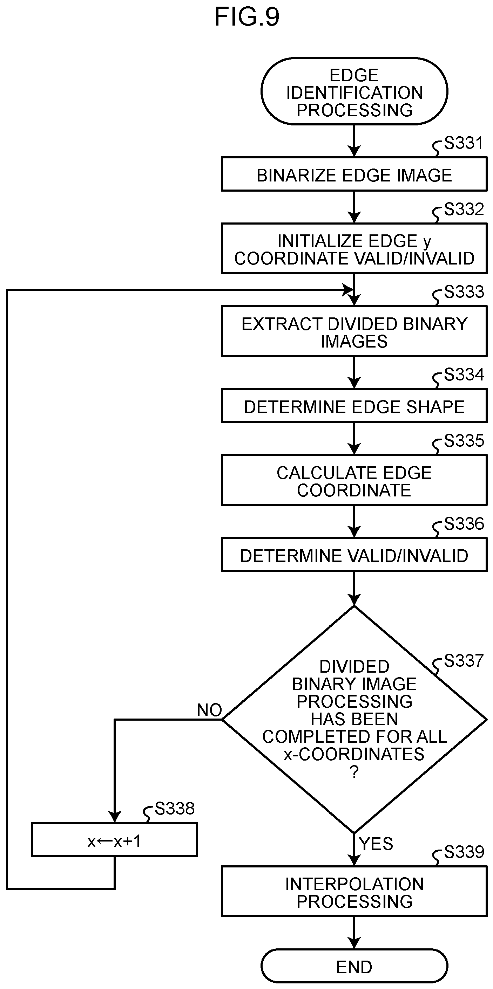

FIG. 9 is a flowchart illustrating a flow of the edge identification processing illustrated in FIG. 7. The flowchart illustrated in FIG. 9 is started at timing when the processing in Step S32 ends. The edge identification processing proceeds to processing in Step S331.

In the processing in Step S331, the arithmetic unit 3 binarizes the edge image generated by the processing in Step S32. When the edge image is a binary image, this processing is unnecessary. When the edge image is a monochrome image having a gradation, the arithmetic unit 3 binarizes the edge image with an appropriate gradation threshold. A binarized image obtained by this processing is, for example, an image in which a non-edge portion is white and a portion estimated as an edge is black. Accordingly, the processing in Step S331 is completed and the edge identification processing proceeds to processing in Step S332.

In the processing in Step S332, the arithmetic unit 3 initializes a flag array indicating whether the edge is valid or invalid. Specifically, in the image after the projective transformation generated in the processing in Step S24, the edge is imaged to traverse the image in the x-axis direction. For this reason, the arithmetic unit 3 prepares and initializes, for x coordinates, an array for storing a y coordinate of the edge and an array of flags indicating whether the edge is valid or invalid. The array for storing the y coordinate of the edge is an array for storing the same numerical values as an image width and records, for the x coordinates, a y coordinate of the edge calculated by processing explained below. The array for storing the y coordinate of the edge is initialized with a missing value. The flag array indicating whether the edge is valid or invalid is an array for storing the same number of true/false values as the image width and indicates whether values of the y coordinate of the edge with respect to the x coordinates are correct. When the calculated value of the y coordinate of the edge can be determined as being correct, the flag is set to valid (true) and, when the calculated value of the y coordinate of the edge cannot be determined as being correct, the flag is set to invalid (false). The flag array indicating whether the edge is valid or invalid is initialized with a value (false) indicating invalidity. Accordingly, the processing in Step S332 is completed and the edge identification processing proceeds to processing in Step S333.

In the processing in Step S333, the arithmetic unit 3 generates a plurality of divided binary images obtained by dividing a binary image (width W, height h) obtained by the processing in Step S331 into strip-shaped images having width of 1 and height h. Accordingly, the processing in Step S333 is completed and the edge identification processing proceeds to processing in Step S334.

Hereinafter, the arithmetic unit 3 executes processing in Step S334 to Step S336 in ascending order from the smallest x coordinate of the divided binary image generated by the processing in Step S333. When the execution of the processing in Step S334 to Step S336 is completed for one divided binary image, the arithmetic unit 3 extracts the divided binary image from an x-coordinate position obtained by incrementing, by one, the x-coordinate of the divided binary image for which the processing has been completed and repeats the execution of the processing in Step S334 to Step S336 again. From the way of taking the x-axis of the image coordinate system, this processing means that the generation of the strip-shaped divided binary image is repeated starting from the left end of the original binary image until reaching the right end.

In the processing in Step S334, the arithmetic unit 3 extracts pixels that can be edges from the divided binary image and determines, based on the extracted pixels, whether there is one or a plurality of edge candidates in the divided binary image. Specifically, first, the arithmetic unit 3 enumerates the y coordinates of the pixels determined as the edges included in the inside of the divided binary image and generates an edge candidate point y coordinate array {yn} (n=1, 2, ···, Nx). Nx is the number of pixels determined as edges in a divided binary image extracted from a certain x coordinate. Then, the arithmetic unit 3 calculates a difference $\Delta y$ between a maximum value and a minimum value of the edge candidate point y-coordinate array {yn} and compares the difference $\Delta y$ with a preset threshold $T\Delta y$. According to this processing, it is possible to simply determine whether the entire edge candidate point y-coordinate array {yn} configures one edge.

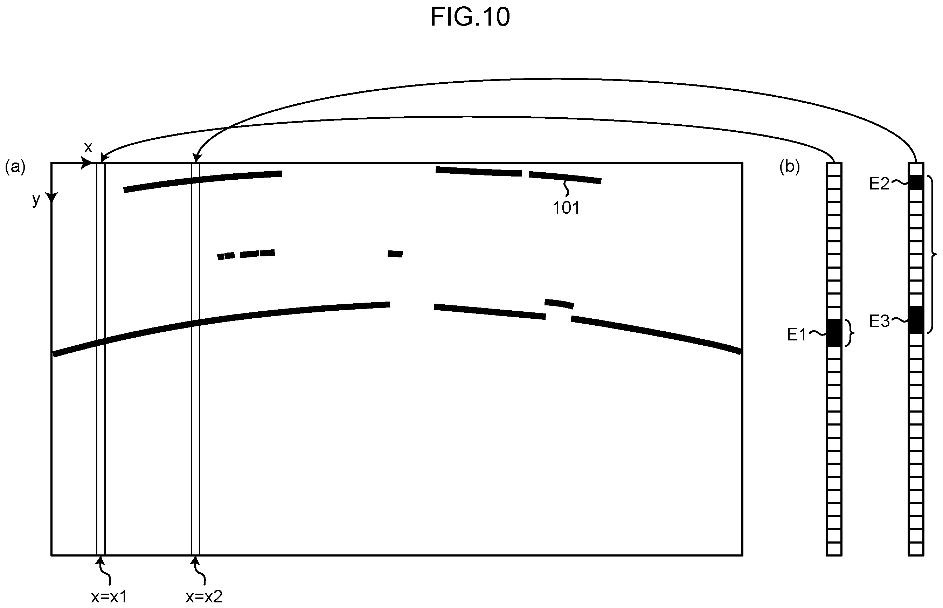

Specific examples of the processing in Step S334 are illustrated in FIGS. 10(a) and 10(b). In the examples illustrated in FIGS. 10(a) and 10(b), only one black edge candidate is present in a divided binary image extracted from a position of x=x1 (an edge candidate E1). In this case, it is highly likely that y coordinates of pixels determined as edges have values close to one another. On the other hand, in a divided binary image extracted from a position of x=x2, two edge candidates are present (edge candidates E2 and E3). In this case, it is highly likely that y coordinates of pixels determined as edges are scattered in a wide range. Therefore, if an upper limit of a y-coordinate width for one edge in the divided binary image is set as the threshold $T\Delta y$, it can be determined whether one or a plurality of edge candidates are present in the divided binary image. Accordingly, the processing in Step S334 is completed and the edge identification processing proceeds to processing in Step S335.

FIG. 9 is referred to again. In the processing in Step S335, the arithmetic unit 3 calculates a y coordinate of the edge in the divided binary image based on the edge candidate point y coordinate array {yn} obtained by the processing in Step S334. Since the y coordinate of the edge represents a y coordinate of an edge at a certain x coordinate of the original binary image, this is represented as yx(x=1, 2, ···, W). In the processing in Step S335, the processing is performed in case classification depending on whether a single edge candidate or a plurality of edge candidates are present in the divided binary image. When a single edge candidate is present in the divided binary image, the arithmetic unit 3 sets an average value ynm of the edge candidate points y-coordinate array {yn} as a y-coordinate yx of the edge in the divided binary image. On the other hand, when a plurality of edge candidates are present in the divided binary image, the arithmetic unit 3 sets, as the y coordinate yx of the edge, an edge closest to a y coordinate y (x-1) of an edge in a divided binary image on the left, that is, a divided binary image processed immediately before, in the edge candidate point y coordinate array {yn}. When the y coordinate y (x-1) of the edge on the divided binary image on the left is a missing value, the arithmetic unit 3 also sets the y coordinate yn of the edge in the processing target divided binary image as a missing value.

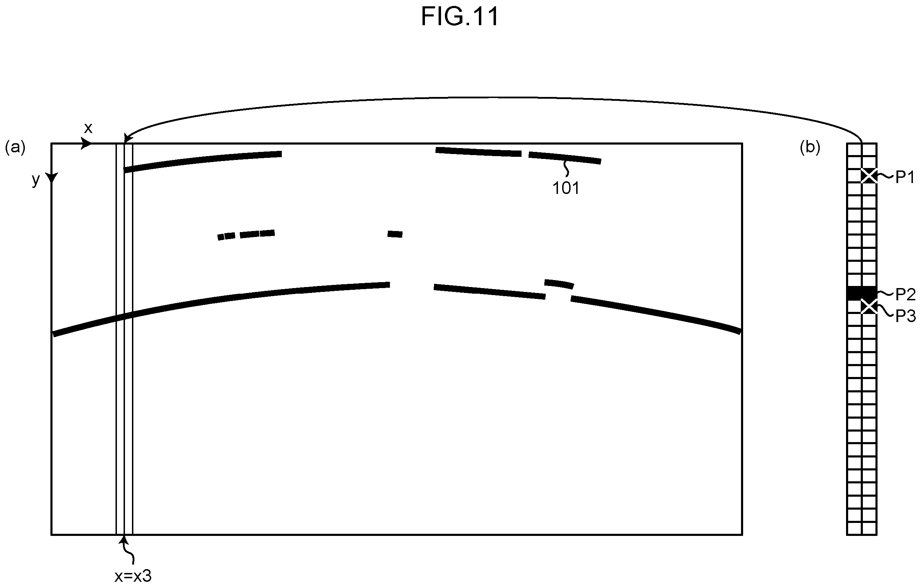

FIGS. 11(a) and 11(b) illustrate specific examples of processing in a case in which a plurality of edge candidates are present in a divided binary image. In the example illustrated in FIGS. 11(a) and 11(b), a plurality of edge candidate points P1 to P3 are present in a divided binary image extracted from a position of x=x3. Among the plurality of edge candidate points P1 to P3, the edge candidate point P2 close to a y coordinate of an edge obtained from an x coordinate position of x=x3-1 on the left is determined as true edge and a y coordinate of the true edge is stored as the y coordinate yn of the edge. On the other hand, it is determined that the edge candidate points P1 and P3 are not true edges. Pixels corresponding to the edge candidate points P1 and P3 in the figure are indicated by ×. According to this processing, when a single edge candidate is present in the divided binary image, the position of the edge can be selected and, when a plurality of edges are present in the divided binary image, the position of an edge considered to be connected closest to the left of the edges can be selected. Accordingly, the processing in Step S335 is completed and the edge identification processing proceeds to processing in Step S336.

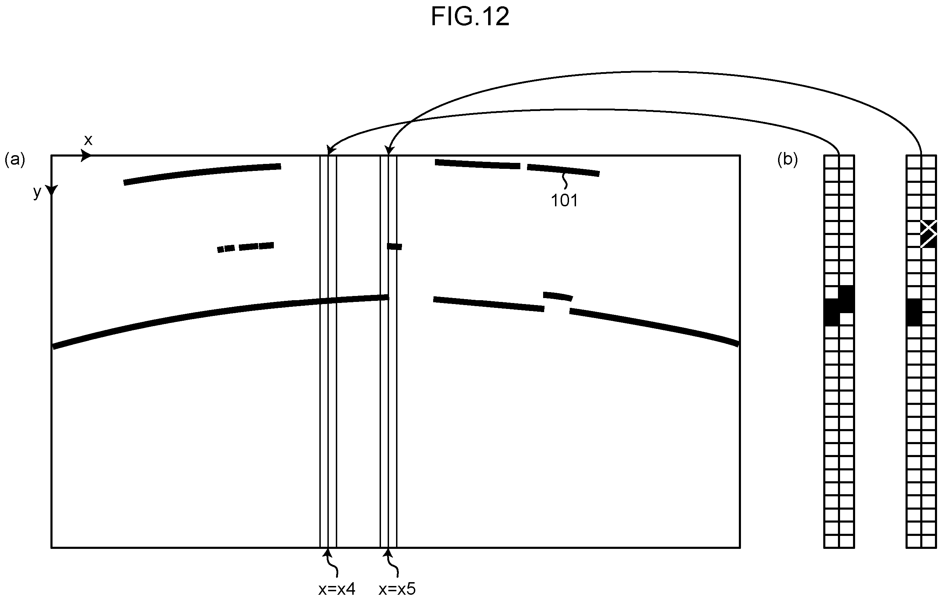

FIG. 9 is referred to again. In the processing in Step S336, the arithmetic unit 3 determines whether the y coordinate yx of the edge calculated in the processing in Step S335 is likely. In the processing in Step S336, as in the processing in Step S335, the processing is performed in case classification according to whether a single edge candidate or a plurality of edge candidates are present in a divided binary image. When a single edge candidate is present in the divided binary image, the arithmetic unit 3 compares a difference $\Delta ys$ (=|yx-y (x-1)|) from the y coordinate y (x-1) of an edge on the left adjacent to the y coordinate yx of the edge at the current x coordinate position and a preset threshold T$\Delta$ys. Then, when $\Delta ys<T\Delta ys$, the arithmetic unit 3 determines that the y coordinate yx of the edge at the current x coordinate position is valid. On the other hand, when not $\Delta ys<T\Delta ys$, the arithmetic unit 3 determines that the y coordinate yx of the edge at the current x coordinate position is invalid. Specifically, as illustrated in FIGS. 12(a) and 12(b), although a single edge candidate is extracted from both of a position of x=x4 and a position of x=x5, at the position of x=x4 where the difference $\Delta ys$ in the y coordinate from the edge on the left is smaller than T$\Delta$ys, it is determined that the edge is connected and is valid. On the other hand, at the position of x=x5 where the difference $\Delta ys$ in the y coordinate from the edge on the left is T$\Delta$ys or more, it is determined that the edge is not connected and is invalid. The invalid pixel is indicated by a slant line in the figures.

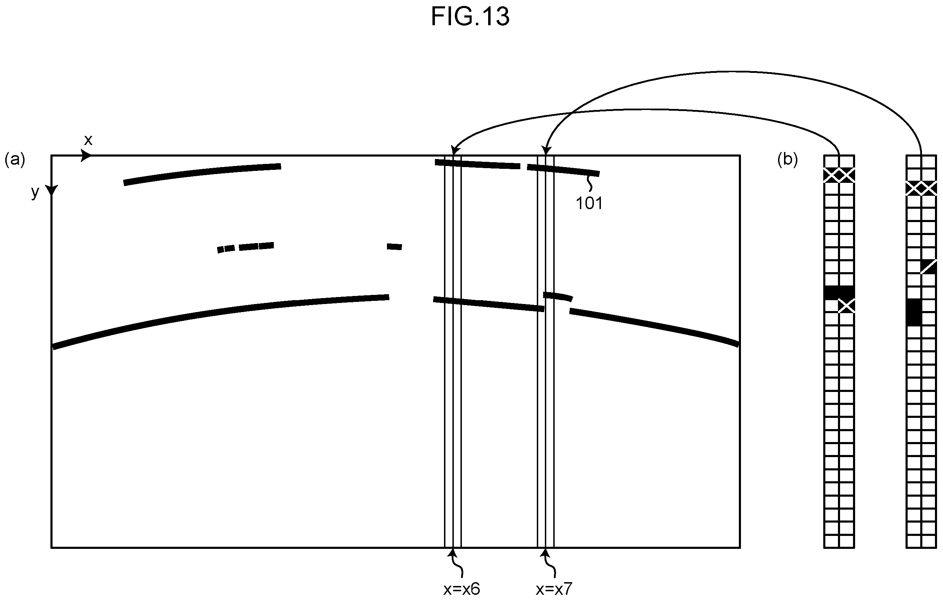

On the other hand, when a plurality of edge candidates are present in the divided binary image, the arithmetic unit 3 compares a difference $\Delta ym$ (=|yx-y (x-1)|) from the y coordinate y (x-1) of the edge on the left adjacent to the y coordinate yx of the edge at the current x coordinate position and a preset threshold value T$\Delta$ym. Then, when $\Delta ym<T\Delta ym$ and the y coordinate y (x-1) of the edge on the left is valid, the arithmetic unit 3 determines that the y coordinate yx of the edge at the current x coordinate position is valid. On the other hand, otherwise, the arithmetic unit 3 determines that the y coordinate yx of the edge at the current x-coordinate position is invalid. Specifically, as illustrated in FIGS. 13(a) and 13(b), although a plurality of edge candidates are present in divided binarized images extracted from a position of x=x6 and a position of x=x7, at the position of x=x6 where the difference $\Delta ys$ in the y coordinate from the edge on the left is smaller than T$\Delta$ys, it is determined that the edge is connected and is valid. On the other hand, at the position of x=x7 where the difference $\Delta ys$ in the y coordinate from the edge on the left is T$\Delta$ys or more, it is determined that the edge is not connected and is invalid. The invalid pixel is indicated by a slant line in the figures. Furthermore, concerning x=x7+1 on the right of x=x7, although the difference $\Delta ys$ in the y coordinate from the edge on the left is smaller than T$\Delta$ys, an edge is determined as invalid because the edge at x=x7 is determined as invalid.

FIG. 9 is referred to again. The processing in Step S336 has an effect of detecting a sudden change in a y coordinate of an edge in a process of the processing and estimating and excluding the change as being caused by erroneous detection in the processing in Step S32. Therefore, a maximum fluctuation amount of the y coordinate allowed for the connected edge only has to be set for both of the threshold value T$\Delta$ys and the threshold value T$\Delta$ym. A reason why it is not determined whether the edge on the left is valid when a single edge candidate is present is that, when an edge is not detected in a divided binary image of a certain x coordinate and a single edge appears in a divided binary image on the right of the divided binary image, the former edge is invalid. Conversely, a reason why it is determined whether the edge on the left is valid when a plurality of edge candidates are present is that determination is suspended until a single edge candidate appears next because, when an edge is not detected in a divided binary image of a certain x coordinate and a plurality of edges appear in a divided binary image on the right of the divided binary image, which edge should be selected cannot be determined. In this processing, it is expected that a single correct edge candidate appears in the divided binary image with a certain high probability, although the edge detected in the processing in Step S32 includes erroneous detection. Accordingly, the processing in Step S336 is completed and the edge identification processing proceeds to processing in Step S337.

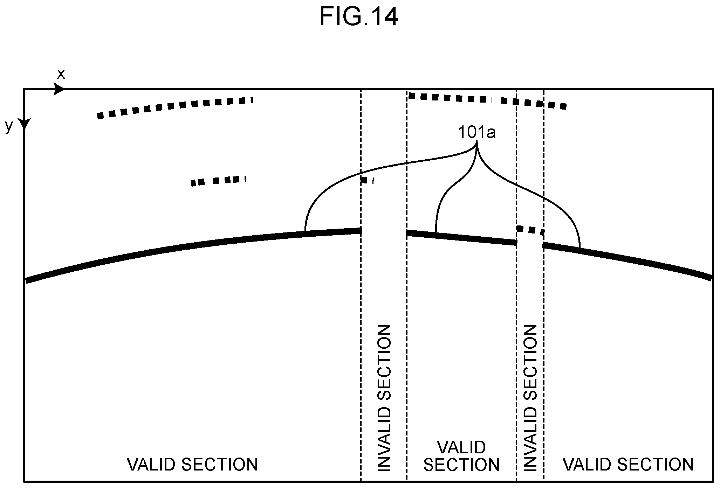

When the processing in Step S334 to Step S336 explained above is completed for all the divided binary images, a processing result is stored in both of the edge y coordinate array and the flag array indicating the valid and invalid determination. FIG. 14 illustrates a conceptual diagram of the processing result. First, an image is divided into a valid section and an invalid section from a flag array indicating the valid and invalid determination. When values of the edge y coordinate array included in the valid section are plotted, the values are plotted like an edge 101a in the figure. The edge 101a is an edge determined as being correctly detected among the edges detected by the processing in Step S32. On the other hand, the invalid section is a section in which an edge has not been detected in the processing in Step S32 or edges have been detected but a correct edge has not been successfully detected.

FIG. 9 is referred to again. In the processing in Step S337, the arithmetic unit 3 discriminates whether the processing in Step S334 to Step S336 has been completed for all the divided binary images. When the processing in Steps S334 to S336 is completed for all the divided binary images as a result of the discrimination (Step S337: Yes), the arithmetic unit 3 advances the edge identification processing to processing in Step S339. On the other hand, when the processing in Steps S334 to S336 has not been completed for all the divided binary images (Step S337: No), as the processing in Step S338, the arithmetic unit 3 increments the x coordinate of the processing target divided binary image by 1 and thereafter returns the edge identification processing to the processing in Step S333.

In the processing in Step S339, for each invalid section, the arithmetic unit 3 interpolates an edge of the invalid section based on an edge y coordinate array {yxn} of a valid section adjacent the invalid section and an x coordinate array {xn} corresponding the valid and invalid sections. n is the number of coordinates of edges in the valid section used for interpolation processing. As a specific interpolation method, for example, assuming that an edge shape in the invalid section can be modeled by a quadratic function formula illustrated in the following Expression (5), a publicly-known fitting method (the least squares method or the like) only has to be applied to {xn} and {yxn}.

$$y = ax^2 + bx + c \quad \cdots (5)$$

When discontinuity of the edges occurs between the invalid section and the valid section adjacent to the invalid section as a result of the interpolation processing, the arithmetic unit 3 may further transform y coordinates of the edges with linear transformation such that the discontinuity of the edges is eliminated. Specifically, it is assumed that, as a result of the interpolation processing by Expression (5) on an invalid section having a range of $xL \leq x \leq xR$, a coordinate of the left end of the invalid section is (xL, yL) and a coordinate of the right end is (xR, yR). At this time, it is assumed that a coordinate of the right end of a valid section adjacent to the left is (xL-1, yL') a coordinate of the left end of a valid section adjacent to the right is (xR+1, yR') and yL≠yL' or yR≠yR'. At this time, the arithmetic unit 3 can eliminate the discontinuity of the edges between the invalid section and the valid section by linearly transforming the y coordinate of the invalid section using the following Expression (6). This is equivalent to subtracting, from the edge shape formed by the y coordinate of the invalid section calculated by the Expression (5), a straight line connecting end points of the valid sections adjacent to both the sides of the invalid section.

$$yxn' = yxn + \big((xR - xn) \times (yL - yL') + (xn - xL) \times (yR - yR')\big)/(xR - xL + 1)$$

$$\cdots (6)$$

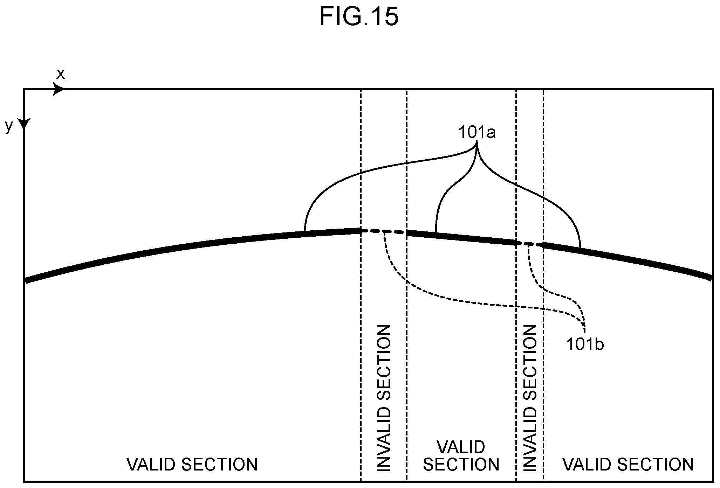

Preprocessing for, for example, changing an extremely short valid section to an invalid section or changing an extremely short invalid section to a valid section and changing a y coordinate of the invalid section to an appropriate value (for example, replacing the y coordinate with an average value of edge y coordinates of neighboring valid sections) may be performed before the interpolation processing. FIG. 15 illustrates an example of an edge image obtained as a result of the processing in Step S339. By combining an interpolated edge 101b and the edge 101a obtained in the processing to that point, erroneous detection (excessive detection and non-detection) can be eliminated and an edge can be correctly detected. Accordingly, the processing in Step S339 is completed and a series of edge identification processing ends.

<Measurement processing>

Subsequently, a flow of the measurement processing in Step S4 is explained in detail with reference to FIG. 16 to FIG. 20. In the measurement processing, the arithmetic unit 3 calculates a physical quantity of a measurement target with image processing. As explained above, since the projective transformation is applied to the image data obtained by imaging the welded section 1c including the bead section 1a of the welded steel pipe 1, the arithmetic unit 3 can calculate a physical quantity concerning the cross-sectional shape of the welded section from an image. Hereinafter, an operation of the arithmetic unit 3 in measuring a pipe thickness, an offset, a bead height, inner surface peaking, outer surface peaking, and a bead rising angle is explained.

As illustrated in FIG. 16(a), the pipe thickness indicates the thickness of a base material 1b of a welded steel pipe at a position separated from the center position of the bead section 1a by a predetermined distance in the circumferential direction. As illustrated in FIG. 16(b), the offset indicates a difference between a height position of one end portion in the circumferential direction of the bead section 1a and a height position of the other end portion in the circumferential direction of the bead section 1a (deviation of the height of a groove). As illustrated in FIG. 16(c), the bead height indicates a difference between a height position of an end portion in the circumferential direction of the bead section 1a and a height position of the center of the bead section 1a (the height of a welded section). As illustrated in FIGS. 16(d) and 16(e), peaking is an index of a degree of sharpness of a butt section. As illustrated in FIG. 16(d), the inner surface peaking indicates the size of a gap between model paper K brought into contact with the inner surface of the welded steel pipe and the inner surface of the welded steel pipe. As illustrated in FIG. 16(e), the outer surface peaking indicates an amount of unevenness of an actual outer surface with respect to a virtual circle (a dotted line portion) along the outer surface of the welded steel pipe. As illustrated in FIG. 16(f), the bead rising angle indicates a rising angle of the circumferential end portion of the bead section 1a with respect to the surface of the base material 1b of the welded steel pipe (an angle of an end of the welding residual).

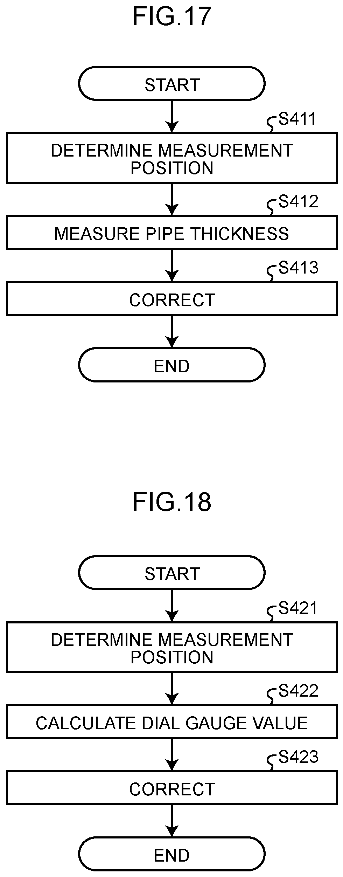

When the pipe thickness illustrated in FIG. 16(a) is measured, as illustrated in FIG. 17, first, a circumferential direction position of the welded steel pipe, the pipe thickness of which is measured, is determined (Step S411). Subsequently, the arithmetic unit 3 specifies a thickness direction of the welded steel pipe at the position determined in Step S411 on the image and calculates the pipe thickness (Step S412). Then, the arithmetic unit 3 applies correction to the calculated pipe thickness (Step S413). Accordingly, the pipe thickness can be measured.

When the offset and the bead height illustrated in FIGS. 16(b) and 16(c) are measured, as illustrated in FIG. 18, first, a circumferential direction position of the welded steel pipe, the offset and the bead height of which are measured, is determined (Step S421). Subsequently, the arithmetic unit 3 calculates the offset and the bead height on the image at the position determined by the processing in Step S421 (Step S422). Then, the arithmetic unit 3 applies correction to the calculated offset and the calculated bead height (Step S423). Accordingly, the offset and the bead height can be measured.

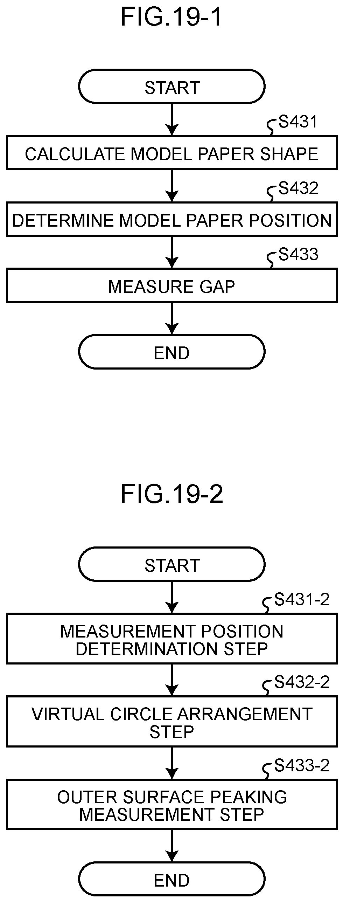

When the inner surface peaking illustrated in FIG. 16(d) is measured, as illustrated in FIG. 19-1, first, the arithmetic unit 3 reproduces, in the image, the shape of the model paper K used for measuring the inner surface peaking (Step S431). At this time, the arithmetic unit 3 desirably adds cross-sectional tilt correction of the model paper K considering an imaging direction of the image. Subsequently, the arithmetic unit 3 calculates a position of the model paper K at the time when the model paper K is applied to the edge of the inner surface of the welded steel pipe detected by the detection processing (Step S432). Then, the arithmetic unit 3 calculates, on the image, a gap between the edge of the inner surface of the welded steel pipe and the model paper K and calculates an inner surface peaking value (Step S433). Accordingly, the inner surface peaking can be measured.

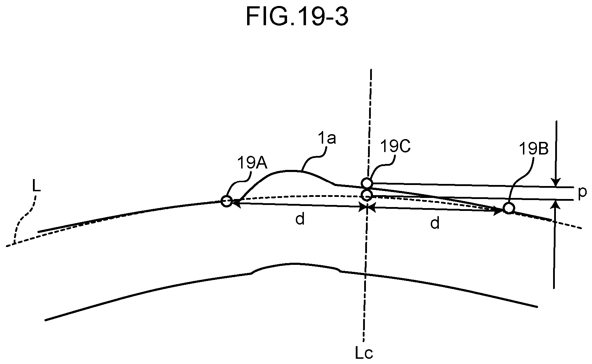

When the outer surface peaking illustrated in FIG. 16(e) is measured, as illustrated in FIG. 19-2, first, the arithmetic unit 3 determines a circumferential direction position (a measurement position) of the welded steel pipe, the outer surface peaking of which is measured, (Step S431-2). At this time, as illustrated in FIG. 19-3, a measurement position 19C is determined to avoid the bead section 1a. That is, the measurement position 19C is determined such that the measurement position 19C is not located on the bead section 1a. Subsequently, as illustrated in FIG. 19-2, the arithmetic unit 3 arranges a virtual circle in the image (Step S432-2). The virtual circle is a circle equivalent to an outer surface edge position at the time when the steel pipe is assumed to be a perfect circle. As illustrated in FIG. 19-3, a virtual circle L is arranged to pass points 19A and 19B. The points 19A and 19B are points separated by a predetermined distance d from a straight line Lc in the radial direction of the steel pipe passing a measurement position 19C and are points on the edge of the outer surface of the welded steel pipe detected by the detection processing. At this time, the arithmetic unit 3 may apply sectional tilt correction for the virtual circle L considering an imaging direction of the image. Subsequently, the arithmetic unit 3 measures a distance p between the virtual circle L and the measurement position 19C, that is, the outer surface peaking with respect to the edge of the outer surface of the welded steel pipe detected by the detection processing (Step S433-2). For example, when the steel pipe is a perfect circle, since the outer surface edge of the welded steel pipe detected by the detection processing excluding the bead section coincides with the virtual circle, the outer surface peaking is zero. Accordingly, the outer surface peaking can be measured.

When the bead rising angle illustrated in FIG. 16(f) is measured, as illustrated in FIG. 20, first, the operator determines a circumferential position of the welded steel pipe, the bead rising angle of which is measured, (Step S441). Subsequently, the arithmetic unit 3 searches for, starting from a position where the bead rising angle is measured, tangential lines that are in contact with the outer surface of the welded steel pipe and the edge of the bead section (Step S442). Then, the arithmetic unit 3 calculates, on the image, an angle formed by the found tangential lines (Step S443). Accordingly, the bead rising angle can be measured.

As is clear from the above explanation, in the measurement apparatus 20 according to the first embodiment of the present invention, the arithmetic unit 3 images an image of the cross section of the welded steel pipe 1 including the marker plate 10, transforms the image of the cross section into a facing image having a predetermined resolution using the image of the marker plate 10, detects an edge of the cross section from the facing image, and calculates a predetermined physical quantity based on the detected edge. In addition, the arithmetic unit 3 selects a machine learning model that corresponds to a type of an edge to be detected and in which a facing image is used as input data and an edge of a cross section in the facing image is used as output data, detects an edge of the cross section in the facing image by inputting the facing image to the selected machine learning model, and removes excessive detection of the edge and interpolates non-detection of the edge based on the connectivity of the detected edge. Accordingly, a predetermined physical quantity in the cross section of the welded steel pipe 1 can be measured in a short time and with high accuracy.

[Second Embodiment]

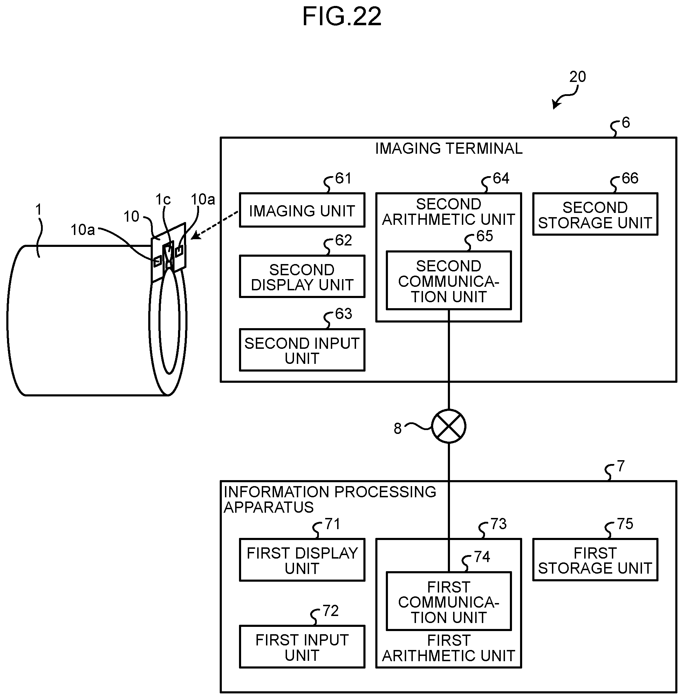

FIG. 21 is a schematic diagram illustrating a configuration of a measurement apparatus according to a second embodiment of the present invention. FIG. 22 is a block diagram illustrating a main part configuration of the measurement apparatus illustrated in FIG. 21. As illustrated in FIG. 21, a measurement apparatus 20 according to the second embodiment of the present invention includes an imaging terminal 6, an information processing apparatus 7, and the marker plate 10. In the present embodiment, the imaging terminal 6 is configured by a computer including an imaging unit 61, a second display unit 62, a second input unit 63, a second arithmetic unit 64, a second communication unit 65, and a second storage unit 66.

Specifically, the imaging terminal 6 is configured by a smartphone, a tablet terminal, a digital camera with a communication function, and the like. In the present embodiment, a case in which the smartphone is the imaging terminal 6 is explained. The imaging unit 61 is configured by a camera or the like built in the smartphone. The second display unit 62 is configured by a display or the like built in the smartphone. The second input unit 63 is configured by a touch panel or the like built in the smartphone. The second arithmetic unit 64 is configured by a CPU, a GPU, or the like built in the smartphone. The second communication unit 65 is provided in the second arithmetic unit 64 and is configured by a communication interface or the like built in the smartphone. The second storage unit 66 is configured by a memory or the like built in the smartphone.

The imaging unit 61, the second display unit 62, the second arithmetic unit 64, and the second storage unit 66 included in the imaging terminal 6 have functions equivalent to the functions of the imaging unit 2, the arithmetic unit 3, the display unit 4, and the storage unit 5 included in the measurement apparatus 20 in the first embodiment. Since the imaging terminal 6 includes the imaging unit 61, a virtual device (cloud or the like) on a network cannot be set. The imaging terminal 6 configures a measurement apparatus that, together with the marker plate 10, measures a physical quantity of the welded section 1c.

The information processing apparatus 7 is configured by a computer. As the computer, an integrated personal computer including a first display unit 71, a first input unit 72, a first arithmetic unit 73, a first communication unit 74, and a first storage unit 75 can be exemplified.

The first display unit 71 is configured by a monitor or the like. The first input unit 72 is configured by a keyboard, a mouse, a microphone, and the like. The first arithmetic unit 73 is configured by a CPU, a GPU, or the like and also includes the first communication unit 74. The first communication unit 74 is provided in the first arithmetic unit 73 and is configured by a communication interface or the like. The first storage unit 75 is configured by a hard disk, a solid stay, a drive, and the like. As the information processing apparatus 7, a virtual device (cloud or the like) on a network may be used.

The imaging terminal 6 and the information processing apparatus 7 are capable of communicating with each other via the network 8 by the second communication unit 65 and the first communication unit 74 respectively provided in the imaging terminal 6 and the information processing apparatus 7. As the network 8, a publicly-known network technology can be used. The network 8 includes, for example, the Internet, a local area network, or a combination of the Internet and the local area network. As a communication method, a wired method, a wireless method, or a method obtained by combining the wired and wireless methods can be used. The imaging terminal 6 and the information processing apparatus 7 may be configured to be capable of directly communicating with each other not via the network 8 by the second communication unit 65 and the first communication unit 74. In this case as well, the wired method, the wireless method, or the combination of the wired and wireless methods can be used. As a more specific communication method at this time, as an example of wired communication, a predetermined communication signal via a signal line connecting communication units, a universal serial bus (hereinafter referred to as USB in abbreviation), and the like can be used. On the other hand, Bluetooth (registered trademark) and the like can be used as an example of the wireless communication.

In the measurement apparatus 20 in the present embodiment, when a physical quantity of the welded section 1c is measured, the imaging terminal 6 and the information processing apparatus 7 are not limited to being present in the same facility. For example, the imaging terminal 6 and the information processing apparatus 7 may be respectively present in different facilities of an own company. The imaging terminal 6 may be present in a facility of the own company and the information processing apparatus 7 may be present in a facility of another company. The imaging terminal 6 may be present in a facility of another company and the information processing apparatus 7 may be present in a facility of the own company. That is, if the imaging terminal 6 and the information processing apparatus 7 can communicate with each other, the positions of the imaging terminal 6 and the information processing apparatus 7 in measuring a physical quantity of the welded section 1c are not particularly limited.

The measurement apparatus 20 in the present embodiment may cause not only the second storage unit 66 of the imaging terminal 6 but also the first storage unit 75 of the information processing apparatus 7 to store image data captured by the imaging unit 61, information concerning a measured physical quantity, and the like. That is, the imaging terminal 6 may transmit information such as information including the measured physical quantity from the second communication unit 65 to the first communication unit 74 of the information processing apparatus 7 and cause the first storage unit 75 including a storage area having a larger capacity than the second storage unit 66 to record the information.

The information transmitted from the imaging terminal 6 to the information processing apparatus 7 is predetermined information determined in advance according to a measurement purpose or the like. Examples of the predetermined information include image data captured by the imaging unit 61. The predetermined information includes parameters at the time of processing in the imaging terminal **6**. The parameters include, for example, a type, a position, an angle, a size, and an identifier, which are information concerning the pattern 10a arranged on the marker plate 10. Furthermore, the parameters include the resolution and the like in the projective transformation processing explained above. It is preferable that the operator can designate these parameters of the processing by operating the second input unit 63 of the imaging terminal **6**.

The predetermined information includes a processing result in the imaging terminal **6**. The processing result includes text data concerning the parameters of the projective transformation. The predetermined information includes basic information such as a date and time of imaging, a place of the imaging, an imaging person, information concerning the imaging terminal 6, and information concerning the welded steel pipe 1. The information concerning the imaging terminal 6 includes, for example, information such as an identifier and an IP address of the imaging terminal 6. The information concerning the welded steel pipe 1 includes information capable of identifying the welded steel pipe 1 such as an object number, an object name, a lot number, and a standard and information for characterizing the welded steel pipe 1. The information concerning the welded steel pipe 1 is input by the operator using, for example, the second input unit 63 of the imaging terminal 6.

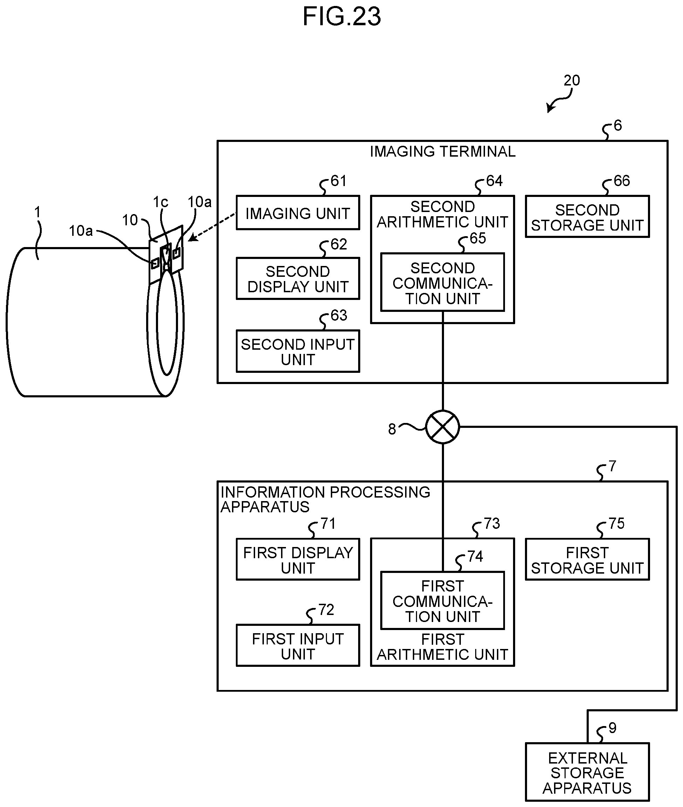

As illustrated in FIG. 23, the measurement apparatus 20 in the present embodiment may include an external storage apparatus 9, which is data recording means using a large-scale database, separately from the imaging terminal 6 and the information processing apparatus 7. The external storage apparatus 9 is provided in a facility different from the facility in which the imaging terminal 6 and the information processing apparatus 7 are provided. In the measurement apparatus 20 in the present embodiment, predetermined information and the like only have to be recorded in the external storage apparatus 9. As the external storage apparatus 9, a virtual device (cloud or the like) on a network may be used.

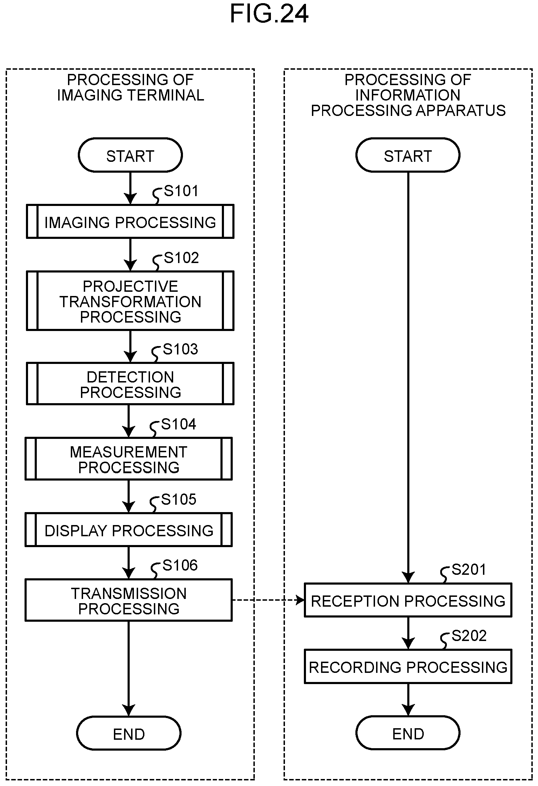

FIG. 24 is a flowchart illustrating a flow of processing of the imaging terminal 6 and the information processing apparatus 7 carried out in the measurement apparatus 20 illustrated in FIG. 21. Imaging processing S101, projective transformation processing S102, detection processing S103, measurement processing S104, and display processing S105 illustrated in FIG. 21 are the same as the imaging processing S1, the projective transformation processing S2, the detection processing S3, the measurement processing S4, and the display processing S5 illustrated in FIG. **2.**

In the measurement apparatus 20 in the present embodiment, first, the imaging unit 61 of the imaging terminal 6 captures images of the welded section 1c including the bead section 1a and the marker plate 10 at a predetermined position (the imaging processing S101). Subsequently, the second arithmetic unit 64 of the imaging terminal 6 executes projective transformation on captured image data (the projective transformation processing S102). Subsequently, the second arithmetic unit 64 of the imaging terminal 6 detects an edge position of the cross section of the welded steel pipe 1 using the image data after the projective transformation (the detection processing S103). Subsequently, the second arithmetic unit 64 of the imaging terminal 6 measures a predetermined physical quantity concerning the cross-sectional shape of the welded section 1c based on the detected edge position (the measurement processing S104). Subsequently, the second display unit 62 of the imaging terminal 6 displays, for example, information concerning the measured predetermined physical quantity (the display processing S105). Thereafter, the second communication unit 65 of the imaging terminal 6 transmits predetermined information such as the information concerning the measured physical quantity to the first communication unit 74 of the information processing apparatus 7 (the transmission processing S106).

Subsequently, the first communication unit 74 of the information processing apparatus 7 receives the predetermined information from the second communication unit 65 of the imaging terminal 6 (the reception processing S201). Thereafter, the information processing apparatus 7 records predetermined information with the first storage unit 75 (the recording processing S202).

The measurement apparatus 20 in the present embodiment can be operated not only as a simple measurement system but also as a measurement support system for an operator on site by using the imaging terminal **6.** For example, as a result of introducing the high portability of the imaging terminal 6 and the image transformation processing using the marker plate 10, the operator is capable of carrying out measurement of a predetermined physical quantity of the welded section 1c from a free position. In this case, by simplifying a user interface, it is possible to measure a physical quantity without carrying out, on the operator, special training for physical quantity measurement. In the imaging terminal **6,** by displaying a processing result and the like on the second display unit 62 in real time, the operator is capable of searching for a direction of the imaging unit 61 suitable for capturing the cross section of the welded steel pipe 1 and performing imaging by the imaging unit 61 from optimal conditions, leading to a more preferable state.

In the measurement apparatus 20 in the present embodiment, when the physical quantity measurement by the imaging terminal 6 is performed, the operator can change, based on the displayed information including the physical quantity, imaging conditions for image data of the welded section 1c, in which the marker plate 10 is provided, imaged together with the marker plate 10 and use the changed imaging conditions as a clue to search for an optimum imaging position. For that reason, the measurement apparatus 20 is useful as a measurement support system of a field operator. In particular, when the imaging terminal 6 including the second display unit 62 is used, the usefulness explained above is further enhanced. At this time, when the imaging processing S101 explained above is executed, imaging conditions in the imaging processing S101 can be changed.

[Third Embodiment]

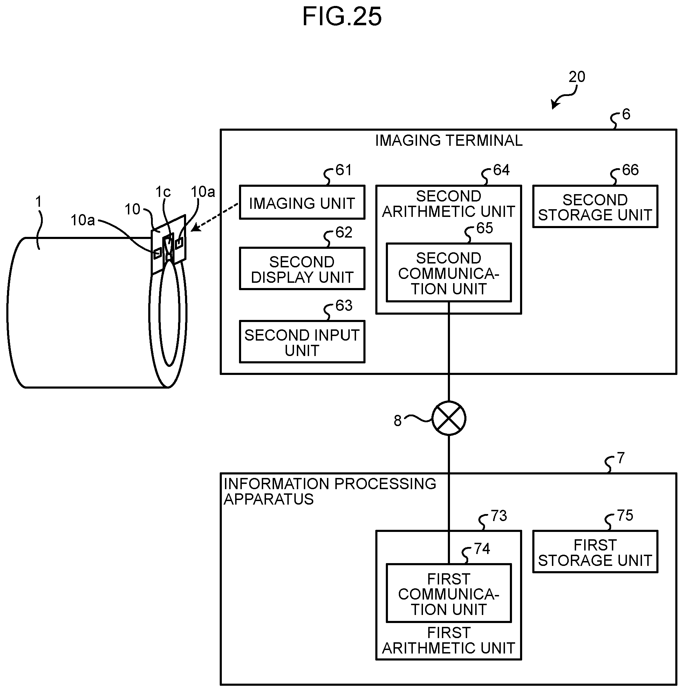

FIG. 25 is a block diagram illustrating a main part configuration of the measurement apparatus 20 according to a third embodiment of the present invention. As illustrated in FIG. 25, the measurement apparatus 20 in the present embodiment includes the imaging terminal 6, the information processing apparatus 7, and the marker plate 10. The imaging terminal 6 is configured by a computer including the imaging unit 61, the second display unit 62, the second input unit 63, the second arithmetic unit 64, the second communication unit 65, and the second storage unit 66. In the present embodiment, a case in which the smartphone is the imaging terminal 6 is explained. The imaging terminal 6 configures a measurement apparatus for measuring a physical quantity of the welded section 1c together with the marker plate 10. The information processing apparatus 7 is configured by a computer including at least the first arithmetic unit 73, the first communication unit 74, and the first storage unit 75. The imaging terminal 6 and the information processing apparatus 7 are capable of communicating with each other via the network 8 by the second communication unit 65 and the first communication unit 74 respectively provided in the imaging terminal 6 and the information processing apparatus 7. The network 8 can use the same technology as technology of the network 8 in the second embodiment described above. The imaging terminal 6 and the information processing apparatus 7 may be configured to be capable of directly communicating with each other not via the network 8 by the second communication unit 65 and the first communication unit 74. In this case as well, the same technology as the technology in the case of directly performing communication in the second embodiment explained above can be used.

In the measurement apparatus 20 in the present embodiment, the imaging terminal 6 and the information processing apparatus 7 are not limited to being present in the same facility when physical quantity measurement is performed. For example, the imaging terminal 6 and the information processing apparatus 7 may be respectively present in different facilities of an own company. The imaging terminal 6 may be present in a facility of the own company and the information processing apparatus 7 may be present in a facility of another company. The imaging terminal 6 may be present in a facility of another company and the information processing apparatus 7 may be present in a facility of the own company. That is, if the imaging terminal 6 and the information processing apparatus 7 can communicate with each other, the positions of the imaging terminal 6 and the information processing apparatus 7 at the time of the physical quantity measurement are not particularly limited.

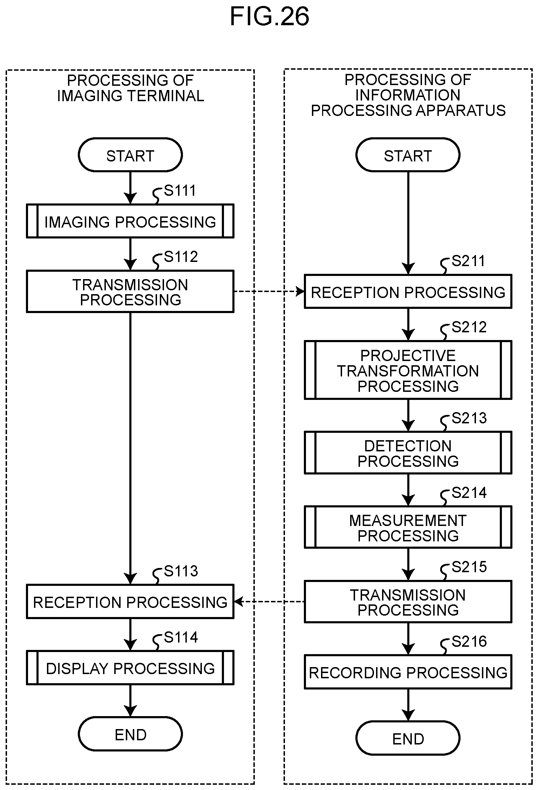

FIG. 26 is a flowchart illustrating a flow of processing of the imaging terminal 6 and the information processing apparatus 7 carried out in the measurement apparatus illustrated in FIG. 24. Imaging processing S111, projective transformation processing S212, detection processing S213, measurement processing S214, and display processing S114 illustrated in FIG. 26 are the same as the imaging processing S1, the projective transformation processing S2, the detection processing S3, the measurement processing S4, and the display processing S5 illustrated in FIG. 3.

In the measurement apparatus 20 in the present embodiment, first, the imaging unit 61 of the imaging terminal 6 captures images of the welded section 1c and the marker plate 10 at a predetermined position (the imaging processing S111). Subsequently, the second communication unit 65 of the imaging terminal 6 transmits information for projective transformation and physical quantity measurement of image data to the first communication unit 74 of the information processing apparatus 7 (the transmission processing S112).

The information transmitted from the imaging terminal 6 to the information processing apparatus 7 is predetermined information determined in advance according to, for example, processing performed in the information processing apparatus 7. The predetermined information for the projective transformation and the physical quantity measurement of the image data includes image data captured by the imaging unit 61. The predetermined information includes parameters at the time of processing in the information processing apparatus 7. The parameters include a type, a position, an angle, a size, and an identifier, which are information concerning the pattern 10a arranged on the marker plate 10. The parameters include resolution in the projective transformation processing S212. It is preferable that the operator can designate these parameters of the processing by operating the second input unit 63 of the imaging terminal 6.

The predetermined information includes basic information such as information concerning a date and time of imaging, a place of the imaging, an imaging person, and equipment used for the imaging and information concerning the welded steel pipe 1. The information concerning the equipment used for the imaging includes, for example, information such as an identifier and an IP address of the equipment. The information concerning the welded steel pipe 1 includes information that can identify the welded steel pipe 1 such as an object number, an object name, a lot number, and a standard and information for characterizing the welded steel pipe 1.

Subsequently, the information processing apparatus 7 receives predetermined information from the second communication unit 65 of the imaging terminal 6 with the first communication unit 74. Subsequently, the first arithmetic unit 73 of the information processing apparatus 7 carries out projective transformation on the captured image data (the projective transformation processing S212). Subsequently, the first arithmetic unit 73 of the information processing apparatus 7 detects an edge position of the cross section of the welded steel pipe 1 using the image data after the projective transformation (the detection processing S213). Subsequently, the first arithmetic unit 73 of the information processing apparatus 7 measures a predetermined physical quantity concerning the cross-sectional shape of the welded section 1c based on the detected edge position (the measurement processing S214). Subsequently, the first communication unit 74 of the information processing apparatus 7 transmits information concerning the measured predetermined physical quantity to the second communication unit 65 of the imaging terminal 6 (the transmission processing S215). Thereafter, the information processing apparatus 7 records the information received from the imaging terminal 6 and information concerning the predetermined physical quantity measured by the information processing apparatus 7 in the first storage unit 75 (the recording processing S216).

Subsequently, the second communication unit 65 of the imaging terminal 6 receives the information concerning the measured physical quantity from the first communication unit 74 of the information processing apparatus 7 (the reception processing S113). Subsequently, after the second arithmetic unit 64 of the imaging terminal 6 receives the physical quantity, the second display unit 62 of the imaging terminal 6 displays the information concerning the measured physical quantity on the second display unit 62 (the display processing S114).

The information concerning the measured physical quantity transmitted from the information processing apparatus 7 to the imaging terminal 6 includes the following. For example, the information concerning the measured physical quantity includes processing result image data. The processing result image data includes a value of a physical quantity or the like with respect to image data captured by the imaging unit 61 of the imaging terminal 6 or image data obtained by subjecting the image data to projective transformation. In this case, the imaging terminal 6 can directly display the received image data on the second display unit 62. Furthermore, the information concerning the measured physical quantity includes text data concerning parameters of the projective transformation. In this case, the imaging terminal 6 can display information obtained by analyzing the received text data on the second display unit 62. Furthermore, it is preferable that the imaging terminal 6 processes image data previously transmitted to the information processing apparatus 7 to create image data to which a value of the physical quantity is added and displays the image data on the second display unit 62.

[Fourth Embodiment]

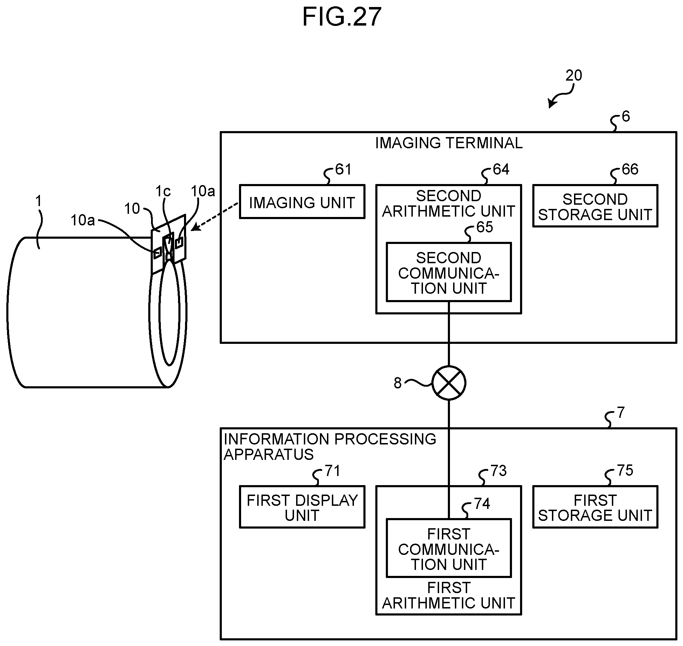

FIG. 27 is a block diagram illustrating a main part configuration of the measurement apparatus 20 according to a fourth embodiment of the present invention. As illustrated in FIG. 27, the measurement apparatus 20 in the present embodiment includes the imaging terminal 6, the information processing apparatus 7, and the marker plate 10. The imaging terminal 6 is configured by a computer including the imaging unit 61, the second arithmetic unit 64, the second communication unit 65, and the second storage unit 66. In the present embodiment, a case in which a digital camera equipped with a communication function is the imaging terminal 6 is explained. The imaging terminal 6 configures an imaging device for measuring a physical quantity of the welded section 1c together with the marker plate 10. The information processing apparatus 7 is configured by a computer including at least the first display unit 71, the first arithmetic unit 73, the first communication unit 74, and the first storage unit 75. The imaging terminal 6 and the information processing apparatus 7 are capable of communicating with each other via the network 8 by the second communication unit 65 and the first communication unit 74 respectively provided in the imaging terminal 6 and the information processing apparatus 7. The network 8 can use the same technology as technology of the network 8 in the second embodiment described above. The imaging terminal 6 and the information processing apparatus 7 may be configured to be capable of directly communicating with each other not via the network 8 by the second communication unit 65 and the first communication unit 74. In this case as well, the same technology as the technology in the case of directly performing communication in the second embodiment explained above can be used.

The measurement apparatus 20 in the present embodiment is not limited to the imaging terminal 6 and the information processing apparatus 7 being present in the same facility in measuring a predetermined physical quantity. For example, the imaging terminal 6 and the information processing apparatus 7 may be respectively present in different facilities of an own company. The imaging terminal 6 may be present in a facility of the own company and the information processing apparatus 7 may be present in a facility of another company. The imaging terminal 6 may be present in a facility of another company and the information processing apparatus 7 may be present in a facility of the own company. That is, if the imaging terminal 6 and the information processing apparatus 7 can communicate with each other, the positions of the imaging terminal 6 and the information processing apparatus 7 at the time of the physical quantity measurement are not particularly limited.

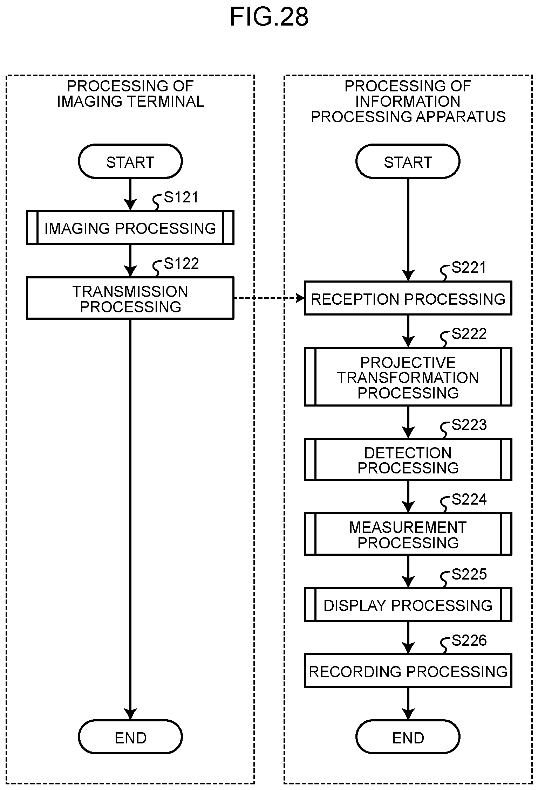

FIG. 28 is a flowchart illustrating a flow of processing of the imaging terminal 6 and the information processing apparatus 7 carried out in the measurement apparatus 20 illustrated in FIG. 27. Imaging processing S121, projective transformation processing S222, detection processing S223, measurement processing S224, and display processing S225 illustrated in FIG. 28 are the same as the imaging processing S1, the projective transformation processing S2, the detection processing S3, the measurement processing S4, and the display processing S5 illustrated in FIG. **3.**

In the measurement apparatus 20 in the present embodiment, first, the imaging unit 61 of the imaging terminal 6 captures images of the welded section 1c including the bead section 1a and the marker plate 10 at a predetermined position (the imaging processing S121). Subsequently, the second communication unit 65 of the imaging terminal 6 transmits information to the first communication unit 74 of the information processing apparatus 7 (the transmission processing S122). The information transmitted from the imaging terminal 6 to the information processing apparatus 7 includes image data captured by the imaging unit 61.

Subsequently, the first communication unit 74 of the information processing apparatus 7 receives information including the image data from the second communication unit 65 of the imaging terminal 6 (the reception processing S221). Subsequently, the first arithmetic unit 73 of the information processing apparatus 7 executes projective transformation on the received image data (the projective transformation processing S222). Subsequently, the first arithmetic unit 73 of the information processing apparatus 7 detects an edge position of the cross section of the welded steel pipe 1 from the image data after the projective transformation (the detection processing S223). Subsequently, the first arithmetic unit 73 of the information processing apparatus 7 measures a predetermined physical quantity concerning the cross-sectional shape of the welded section 1c based on the detected edge position (the measurement processing S224). Subsequently, the first display unit 71 of the information processing apparatus 7 displays information concerning the measured predetermined physical quantity (the display processing S225). Thereafter, the information processing apparatus 7 records the information received from the imaging terminal 6 and information concerning the predetermined physical quantity measured by the first arithmetic unit 73 in the first storage unit 75 (the recording processing S226).

The parameters at the time of processing in the information processing apparatus 7 are preferably set in advance. Specifically, any one of determining one of the parameters in advance, selecting the parameters out of a plurality of choices, and setting a predetermined value for each processing can be selected. The parameters include a type, a position, an angle, a size, and an identifier, which are information concerning the pattern 10a arranged on the marker plate 10. The parameters include resolution and the like in the projective transformation processing S222.

Basic information at the time when images are captured by the imaging terminal 6 is input to the information processing apparatus 7. The basic information includes basic information such as a date and time of imaging, a place of the imaging, an imaging person, information concerning the imaging terminal 6, information concerning the welded steel pipe 1. The information concerning the imaging terminal 6 includes information such as an identifier and an IP address of the imaging terminal **6.** The information concerning the imaging terminal 6 is stored, for example, in the second storage unit 66 of the imaging terminal 6 and is transmitted from the second communication unit 65 to the first communication unit 74 of the information processing apparatus 7 together with image data captured by the imaging unit 61. The information concerning the welded steel pipe 1 includes information that can identify the welded steel pipe 1 such as an object number, an object name, a lot number, and a standard and information characterizing the welded steel pipe 1. The information concerning the welded steel pipe 1 is transmitted from an external device to the information processing apparatus 7 by communication.

[Fifth Embodiment]

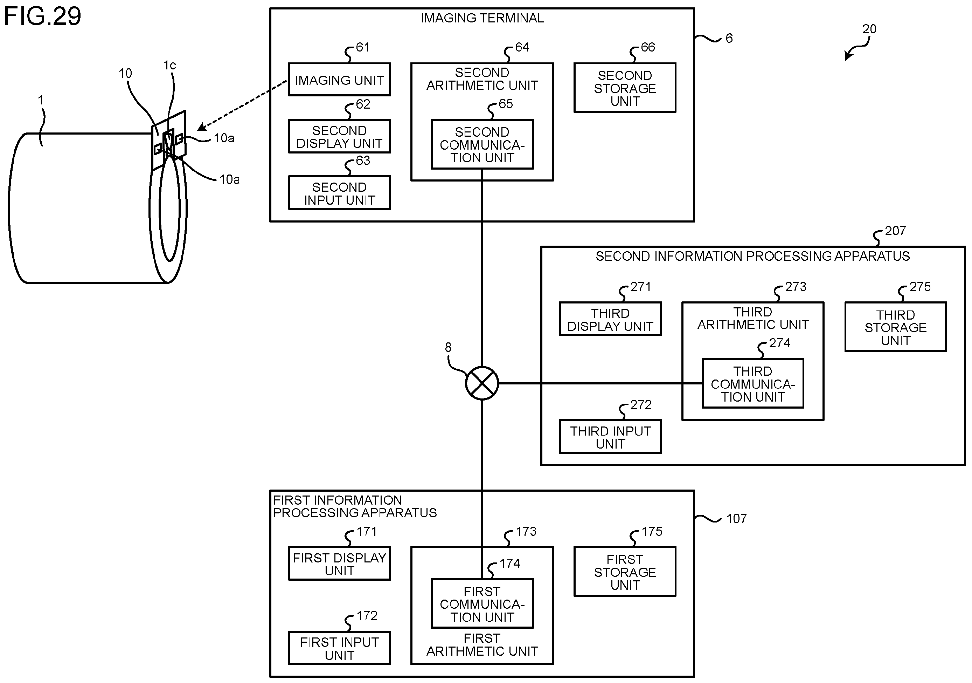

FIG. 29 is a block diagram illustrating a main part configuration of a measurement apparatus according to a fifth embodiment of the present invention. The measurement apparatus 20 in the present embodiment includes the imaging terminal 6, a first information processing apparatus 107, a second information processing apparatus 207, and the marker plate 10. Hereinafter, pass/fail determination for the welded steel pipe 1 is explained as an example of processing of determining a degree of quality of an object performed by the second information processing apparatus 207.

The imaging terminal 6 is configured by a computer including the imaging unit 61, the second display unit 62, the second input unit 63, the second arithmetic unit 64, the second communication unit 65, and the second storage unit 66. In the present embodiment, a case in which the smartphone is the imaging terminal 6 is explained. The imaging terminal 6 configures a measurement apparatus for measuring a physical quantity of the welded section 1c together with the marker plate 10.

The first information processing apparatus 107 is configured by a computer including at least a first display unit 171, a first input unit 172, a first arithmetic unit 173, a first communication unit 174, and a first storage unit 175. The first information processing apparatus 107 is equivalent to the information processing apparatus 7 included in the measurement apparatus 20 in the second embodiment.

The second information processing apparatus 207 is configured by a computer including at least a third display unit 271, a third input unit 272, a third arithmetic unit 273, a third communication unit 274, and a third storage unit 275. The third display unit 271, the third input unit 272, the third arithmetic unit 273, the third communication unit 274, and the third storage unit 275 have functions equivalent to the functions of the first display unit 71, the first input unit 172, the first arithmetic unit 173, the first communication unit 174, and the first storage unit 175.

The imaging terminal 6, the first information processing apparatus 107, and the second information processing apparatus 207 are capable of communicating with one another via the network 8 by the second communication unit 65, the first communication unit 174, and the third communication unit 274 respectively included in the imaging terminal 6, the first information processing apparatus 107, and the second information processing apparatus 207. The network 8 can use the same technology as technology of the network 8 in the second embodiment described above. The imaging terminal 6, the first information processing apparatus 107, and the second information processing apparatus 207 may be configured to be capable of directly communicating with one another not via the network 8 by the second communication unit 65, the first communication unit 174, and the third communication unit 274. In this case as well, the same technology as the technology in the case of directly performing communication in the second embodiment explained above can be used.

The measurement apparatus 20 in the present embodiment is not limited to the imaging terminal 6, the first information processing apparatus 107, and the second information processing apparatus 207 being present in the same facility in performing physical quantity measurement. For example, the imaging terminal 6, the first information processing apparatus 107, and the second information processing apparatus 207 may be present in different facilities of an own company. The imaging terminal 6 and the first information processing apparatus 107 may be present in different facilities of the own company and the second information processing apparatus 207 may be present in a facility of another company. The imaging terminal 6 and the second information processing apparatus 207 may be present in a facility of the own company and the first information processing apparatus 107 may be present in a facility of another company. The imaging terminal 6 and the first information processing apparatus 107 may be present in a facility of another company and the second information processing apparatus 207 may be present in a facility of the own company. The imaging terminal 6 and the second information processing apparatus 207 may be present in a facility of another company and the first information processing apparatus 107 may be present in a facility of the own company. The imaging terminal 6 may be present in a facility of another company and the first information processing apparatus 107 and the second information processing apparatus 207 may be present in a facility of the own company. That is, if the imaging terminal 6, the first information processing apparatus 107, and the second information processing apparatus 207 can communicate with one another, the positions of the imaging terminal 6, the first information processing apparatus 107, and the second information processing apparatus 207 at the time of physical quantity measurement are not particularly limited.

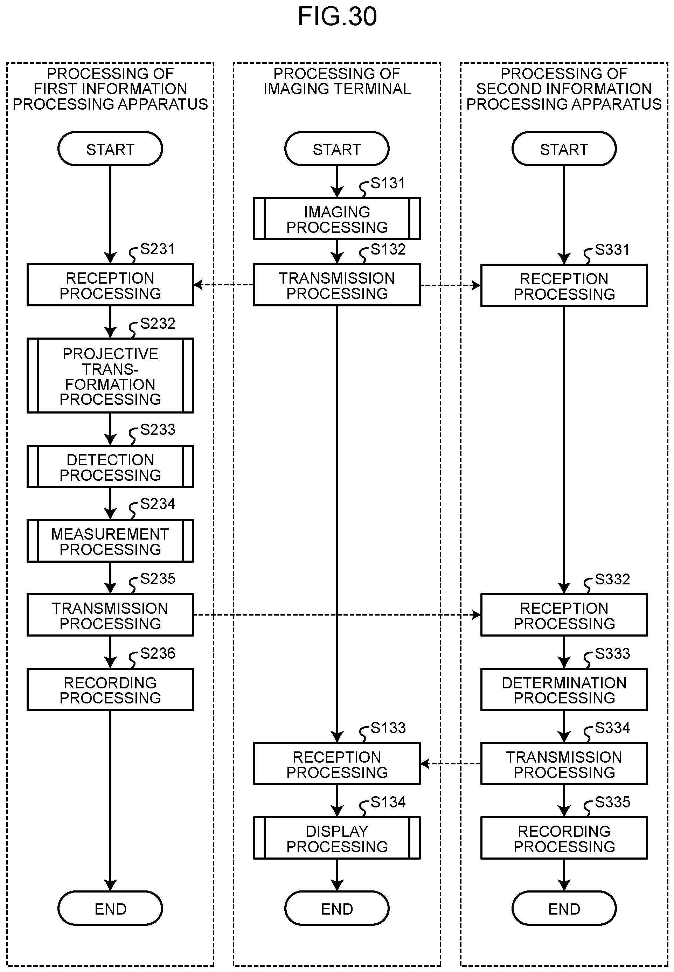

FIG. 30 is a flowchart illustrating an example of processing of the imaging terminal 6, the first information processing apparatus 107, and the second information processing apparatus 207 carried out in the measurement apparatus 20 illustrated in FIG. 29. Imaging processing S131, projective transformation processing S232, detection processing S233, measurement processing S234, and display processing S134 illustrated in FIG. 30 are the same as the imaging processing S1, the projective transformation processing S2, the detection processing S3, the measurement processing S4, and the display processing S5 illustrated in FIG. 3.

In the measurement apparatus 20 in the present embodiment, first, the imaging unit 61 of the imaging terminal 6 captures images of the welded section 1c including the bead section 1a and the marker plate 10 at a predetermined position (the imaging processing S131). Subsequently, the second communication unit 65 of the imaging terminal 6 transmits information respectively to the first communication unit 174 of the first information processing apparatus 107 and the third communication unit 274 of the second information processing apparatus 207 (the transmission processing S132). The first communication unit 174 of the first information processing apparatus 107 receives the information from the second communication unit 65 of the imaging terminal 6 (the reception processing S231). The third communication unit 274 of the second information processing apparatus 207 receives the information from the second communication unit 65 of the imaging terminal 6 (the reception processing S331).

The information transmitted from the imaging terminal 6 to the first information processing apparatus 107 includes image data captured by the imaging unit 61. The information transmitted from the imaging terminal 6 to the first information processing apparatus 107 includes parameters at the time of processing in the imaging terminal 6. The parameters include a type, a position, an angle, a size, and an identifier, which are information concerning the pattern 10a arranged on the marker plate 10. The parameters include resolution and the like in the projective transformation processing S232. It is preferable that the operator can designate these parameters of the processing by operating the second input unit 63 of the imaging terminal 6.

The information transmitted from the imaging terminal 6 to the second information processing apparatus 207 includes basic information at the time when images are captured by the imaging terminal 6. The basic information includes basic information such as a date and time of imaging, a place of the imaging, an imaging person, information concerning the imaging terminal 6, information concerning the welded steel pipe 1. The information concerning the imaging terminal 6 includes information such as an identifier and an IP address of the imaging terminal 6 stored in the second storage unit 66. The information concerning the welded steel pipe 1 includes information that can identify the welded steel pipe 1 such as an object number, an object name, a lot number, and a standard and information characterizing the welded steel pipe 1. The information concerning the welded steel pipe 1 is input by the operator using, for example, the second input unit 63 of the imaging terminal 6. The information transmitted from the imaging terminal 6 to the second information processing apparatus 207 includes, for example, an ID of image data captured by the imaging terminal 6.

Subsequently, the first arithmetic unit 173 of the first information processing apparatus 107 performs projective transformation on the received image data (the projective transformation processing S232). Subsequently, the first arithmetic unit 173 of the first information processing apparatus 107 detects an edge position of the cross section of the welded steel pipe 1 from the image data after the projective transformation (the detection processing S233). Subsequently, the first arithmetic unit 173 of the first information processing apparatus 107 measures a predetermined physical quantity concerning the cross-sectional shape of the welded section 1c based on the detected edge position (the measurement processing S234). The first communication unit 174 of the first information processing apparatus 107 transmits information concerning the measured predetermined physical quantity to the third communication unit 274 of the second information processing apparatus 207 (the transmission processing S235). Thereafter, the first information processing apparatus 107 records information concerning the measured physical quantity in the first storage unit 175 (the recording processing S236). The information concerning the measured physical quantity includes text data concerning parameters of projective transformation.

Subsequently, the third communication unit 274 of the second information processing apparatus 207 receives the information concerning the measured physical quantity from the first communication unit 174 of the first information processing apparatus 107 (the reception processing S332). Subsequently, the third arithmetic unit 273 of the second information processing apparatus 207 performs, based on, for example, the information concerning the measured physical quantity and a plurality of kinds of information concerning the welded steel pipe 1, processing of determining a degree of quality of the welded steel pipe 1 including the welded section 1c imaged by the imaging terminal 6 and processing of changing manufacturing conditions (the determination processing S333). The plurality of kinds of information concerning the welded steel pipe 1 are information concerning a design drawing and a shape after manufacturing of the welded steel pipe 1, information concerning an influence of a change in manufacturing conditions on a measured physical quantity, information concerning a method of determining an operation amount of an operation procedure of manufacturing equipment, and combinations of these kinds of information, the information being held in advance by the second information processing apparatus 207. IA determination criterion explained below is also included in the plurality of kinds of information. The plurality of kinds of information concerning the welded steel pipe 1 are preferably stored in the third storage unit 275 included in the second information processing apparatus 207.

As the processing of determining a degree of quality of the welded steel pipe 1, processing of comparing, for example, the information concerning the measured physical quantity with a determination criterion and determining pass or fail of the welded steel pipe 1 can be exemplified. As a result of this processing, information concerning a degree of quality of the welded steel pipe 1 is obtained. More specifically, information concerning pass/fail determination of the welded steel pipe 1 is obtained. As the processing of changing the manufacturing conditions, processing of determining, based on the information concerning the measured physical quantity, necessity of changing manufacturing conditions of manufacturing equipment for manufacturing the welded steel pipe 1 and processing calculating a specific condition changing method and an operation amount can be exemplified. Furthermore, as the processing of changing the manufacturing conditions, processing of determining instructions relating to shipping, movement, disposal, and other operations for the welded steel pipe 1 in stock can be exemplified. As a result of these kinds of processing, information concerning a change in manufacturing conditions of an object (the welded steel pipe 1) is obtained.

Subsequently, the third communication unit 274 of the second information processing apparatus 207 transmits management information of the welded steel pipe 1 based on the measured physical quantity including one or more pieces of the information concerning the pass/fail determination of the welded steel pipe 1 and the information concerning the change in the manufacturing conditions to the second communication unit 65 of the imaging terminal 6 and a control unit of not-illustrated manufacturing equipment (the transmission processing S334). Thereafter, the second information processing apparatus 207 records the information concerning the pass/fail determination of the welded steel pipe 1 in the third storage unit 275 (the recording processing S335).

The control unit of the not illustrated manufacturing equipment receives, from the third communication unit 274 of the second information processing apparatus 207, the management information of the welded steel pipe 1 based on the measured physical quantity including the information concerning the pass/fail determination of the welded steel pipe 1. Furthermore, the control unit of the not-illustrated manufacturing equipment executes instructions relating to a change of the manufacturing equipment, shipment, movement, disposal, and other operations for the welded steel pipe 1 in stock based on the received management information of the welded steel pipe 1.

The management information of the welded steel pipe 1 based on the measured physical quantity includes, as the information concerning the change in the manufacturing conditions of the welded steel pipe 1, information concerning processing for the welded steel pipe 1 in stock. The information concerning the processing for the welded steel pipe 1 in stock includes information concerning a number, a name, a lot number, a storage warehouse, a position, a scheduled shipping date, a scheduled shipping destination, and the like for the welded steel pipe 1. Furthermore, the information concerning the processing of the stored welded steel pipe 1 includes information concerning specifications of the warehouse, a grade of each of welded steel pipes 1 stored in the warehouse, a scheduled shipping date, a storage position, and the like. The management information of the welded steel pipe 1 based on the measured physical quantity includes, as the information concerning the change in the manufacturing conditions of the welded steel pipe 1, information for changing the manufacturing conditions of the object. The information for changing the manufacturing conditions of the object includes information such as a manufacturing process and conditions thereof, implementation dates of processes, other measurement results during manufacturing, and a number, a name, a lot number, and the like of the manufactured welded steel pipe 1. Furthermore, the information for changing the manufacturing conditions of the object includes information including a predetermined physical quantity, information characterizing the welded steel pipe 1, and information concerning a determination criterion for changing processing conditions.

A method of using management information is explained using a case of stock management and a change in manufacturing conditions. First, the third arithmetic unit 273 extracts management information from the third storage unit 275 using a part or all of the information concerning the welded steel pipe 1 as a key. Subsequently, the third arithmetic unit 273 compares the extracted management information with the predetermined physical quantity measured in the measurement processing S234 and the information characterizing the welded steel pipe 1. As a result of the comparison, if the determination criterion is satisfied, the third arithmetic unit 273 determines not to perform operation such as movement of stocks or condition change of manufacturing equipment. On the other hand, when the determination criterion is not satisfied, the third arithmetic unit 273 determines to perform some operation on the welded steel pipe 1. For example, in the case of the stock management, the third arithmetic unit 273 determines to move the position of the welded steel pipe 1 according to a predetermined rule obtained from the information characterizing the welded steel pipe 1. A specific moving method includes moving the position of the welded steel pipe 1 to a place indicating an appropriate grade, moving the position of the welded steel pipe 1 to a discard scheduled place. Furthermore, for example, in the case of control of the manufacturing equipment, the third arithmetic unit 273 extracts, from the information characterizing the welded steel pipe 1, conditions of the manufacturing equipment that affect the predetermined physical quantity and determines an operation procedure and an operation amount of the manufacturing equipment.

Subsequently, when information concerning pass/fail determination of the welded steel pipe 1 is included in the management information of the welded steel pipe 1, the second communication unit 65 of the imaging terminal 6 receives the information concerning the pass/fail determination of the welded steel pipe 1 from the third communication unit 274 of the second information processing apparatus 207 (the reception processing S133). Thereafter, the second display unit 62 of the imaging terminal 6 displays the information concerning the pass/fail determination of the welded steel pipe 1 (the display processing S134). The measurement apparatus 20 in the present embodiment is not limited to transmitting the information concerning the pass/fail determination of the welded steel pipe 1 determined by the second information processing apparatus 207 to the imaging terminal 6 in real time after the pass/fail determination is performed. The operator operates the second input unit of the imaging terminal 6 to transmit information such as an ID of image data corresponding to the welded steel pipe 1, a result of the pass/fail determination of which the operator desires to know, to the second information processing apparatus 207 and requests the information concerning the pass/fail determination of the welded steel pipe 1. Then, based on the received information such as the ID of the image data, the second information processing apparatus 207 transmits the information concerning the pass/fail determination of the welded steel pipe 1 corresponding to an ID of image data recorded in the third storage unit 275 to the imaging terminal 6. Accordingly, after performing physical quantity measurement for the welded steel pipe 1 using the imaging terminal 6, at any timing before shipping the welded steel pipe 1 as an object, the operator can carry out inspection such as pass/fail determination of the welded steel pipe 1, stock management, and manufacturing condition change and perform quality and manufacturing management.

The present invention can be applied as a measurement step included in an object manufacturing method. A physical quantity concerning a cross-sectional shape of an object may be measured in a publicly-known or existing manufacturing step. According to the object manufacturing method explained above, it is possible to improve a manufacturing yield of the object.

Furthermore, the present invention can be applied to an object quality control method. Quality control of an object may be performed by measuring a physical quantity concerning the cross-sectional shape of the object. Specifically, in the present invention, it is possible to measure a physical quantity concerning the cross-sectional shape of the object and perform quality control for the object from a measurement result. In a quality control step, based on the measurement result, it is determined whether the physical quantity satisfies a control standard designated in advance and the quality of the object is controlled. With the object quality control method explained above, it is possible to provide a high-quality welded steel pipe.

[Example]

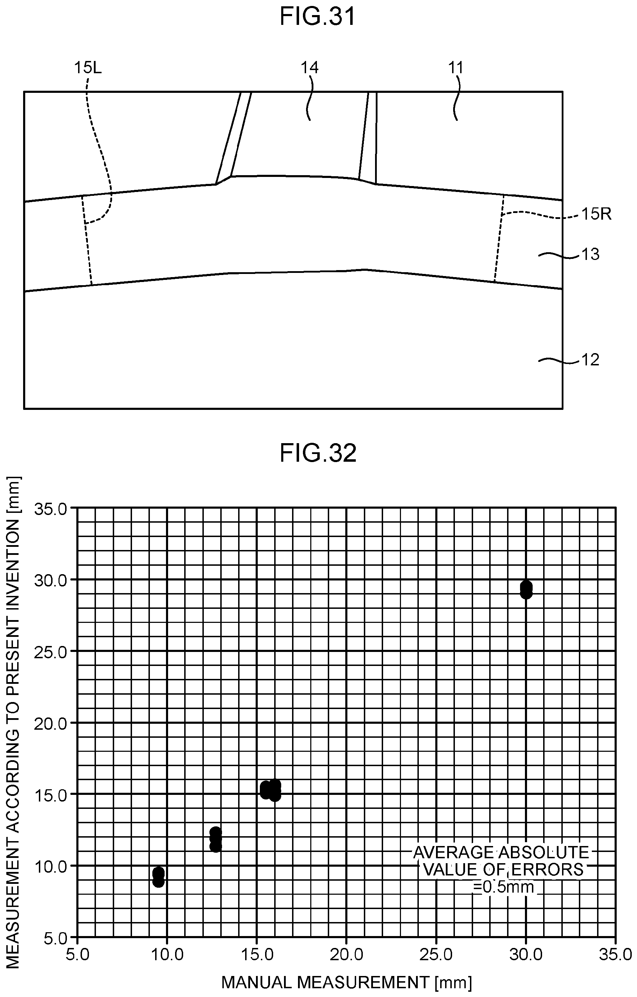

Lastly, an example of the present invention is explained. In the present embodiment, a cross section of a welded section of a welded steel pipe was selected as a measurement target of a physical quantity. As the marker plate 10, a marker plate on which four AR markers were arranged was used. A smartphone was used as the imaging terminal 6 and a notebook PC equipped with a graphic board was used as the information processing apparatus 7. Communication between the imaging terminal 6 and the information processing apparatus 7 is implemented by data exchange by a hard disk via a USB port. In the physical quantity measurement processing, ten different cross sections of the welded steel pipe were imaged to measure the pipe thickness. The measurement was performed at one location on each of the left and the right centering on the welding residual. FIG. 31 is a schematic diagram illustrating a state in which positions where pipe thicknesses are measured are superimposed on a captured image. In FIG. 31, reference numeral 11 denotes the outer surface of the welded steel pipe, reference numeral 12 denotes the inner surface of the welded steel pipe, reference numeral 13 denotes the cross section of the welded steel pipe, and reference numeral 14 denotes the welding residual. Broken lines 15L and 15R are lines indicating pipe thicknesses obtained as a result of performing measurement using the measurement method according to the present invention and coincide with a pipe thickness direction. FIG. 32 illustrates a measurement result of the pipe thickness and an error range. In order to evaluate errors of measurement values of the present invention with respect to measurement values of the pipe thicknesses measured manually, an absolute value average of the errors was taken and found as 0.5 mm. As a result, according to the present invention, it was confirmed that a physical quantity such as the pipe thickness can be accurately measured.

The embodiment to which the invention made by the present inventors is applied is explained above. However, the present invention is not limited by the description and the drawings forming a part of the disclosure of the present invention by the present embodiment. That is, all of other embodiments, examples, operation techniques, and the like to be made by those skilled in the art and the like based on the present embodiment are included in the scope of the present invention.

Industrial Applicability

According to the present invention, it is possible to provide a measurement method, a measurement apparatus, an arithmetic unit, an imaging terminal, and an imaging system capable of accurately measuring a predetermined physical quantity at a predetermined position of an object in a short time. According to the present invention, it is possible to provide an object manufacturing method capable of improving a manufacturing yield of an object. According to the present invention, it is possible to provide an object quality control method capable of providing a high-quality object. According to the present invention, it is possible to provide object manufacturing equipment capable of improving an object manufacturing yield. According to the present invention, it is possible to provide an information processing apparatus capable of improving a manufacturing yield of an object and/or providing a high-quality object.

Reference Signs List

| 1 | WELDED STEEL PIPE |
| 1a | BEAD SECTION |
| 1b | BASE MATERIAL |
| 1c | WELDED SECTION |
| 2 | IMAGING UNIT |
| 3 | ARITHMETIC UNIT |
| 4 | DISPLAY UNIT |
| 5 | STORAGE UNIT |
| 6 | IMAGING TERMINAL |
| 7 | INFORMATION PROCESSING APPARATUS |
| 8 | NETWORK |
| 9 | EXTERNAL STORAGE APPARATUS |
| 10 | MARKER PLATE |
| 10a | PATTERN |
| 10b | OPENING |
| 11 | OUTER SURFACE |
| 12 | INNER SURFACE |
| 13 | CROSS SECTION |
| 14 | WELDING RESIDUAL |

19C MEASUREMENT POSITION

20 MEASUREMENT APPARATUS

61 IMAGING UNIT

62 SECOND DISPLAY UNIT

63 SECOND INPUT UNIT

64 SECOND ARITHMETIC UNIT

65 SECOND COMMUNICATION UNIT

66 SECOND STORAGE UNIT

71 FIRST DISPLAY UNIT

72 FIRST INPUT UNIT

73 FIRST ARITHMETIC UNIT

74 FIRST COMMUNICATION UNIT

75 FIRST STORAGE UNIT

101a EDGE

107 FIRST INFORMATION PROCESSING APPARATUS

171 FIRST DISPLAY UNIT

172 FIRST INPUT UNIT

173 FIRST ARITHMETIC UNIT

174 FIRST COMMUNICATION UNIT

175 FIRST STORAGE UNIT

207 SECOND INFORMATION PROCESSING APPARATUS

271 THIRD DISPLAY UNIT

272 THIRD INPUT UNIT

273 THIRD ARITHMETIC UNIT

274 THIRD COMMUNICATION UNIT

275 THIRD STORAGE UNIT

L VIRTUAL CIRCLE

**Claims**

1. A measurement method for measuring a predetermined physical quantity at a predetermined position of an object, the measurement method comprising:

a first step of transforming an image of the object captured together with a marker plate on which a pattern serving as a length reference for length measurement is drawn, into a facing image having predetermined resolution using an image of the pattern in the image;

a second step of detecting an edge of the object from the facing image; and

a third step of calculating the predetermined physical quantity based on the detected edge, wherein the second step includes:

a step of selecting, according to a type of the edge to be detected, a machine learning model in which the facing image is used as input data and the edge in the facing image is used as output data;

a step of detecting the edge in the facing image by inputting the facing image obtained by the first step to the selected machine learning model; and

an edge identification step of removing excessive detection of the edge and/or interpolating non-detection of the edge based on the connectivity of the detected edge.

2. The measurement method according to claim 1, further comprising, before the first step, an imaging step of capturing an image of the object together with the marker plate.

3. The measurement method according to claim 1 or 2, wherein the edge identification step includes:

a step of binarizing an image of the edge;

a step of dividing the binarized image of the edge into a plurality of processing units to generate a plurality of divided binary images;

a step of determining validity or invalidity of the edge in each of the divided binary images considering the edge in the divided binary images adjacent to each other; and

a step of interpolating, based on the edge determined as valid, the edge determined as invalid.

4. A measurement apparatus that measures a predetermined physical quantity at a predetermined position of an object, the measurement apparatus comprising:

a marker plate on which a pattern serving as a length reference for length measurement is drawn;

an imaging unit that captures an image of the object together with the marker plate; and

an arithmetic unit that executes processing of transforming the image into a facing image having predetermined resolution by using an image of the pattern in the captured image, processing of detecting an edge of the object from the facing image, and processing of calculating the predetermined physical quantity based on the detected edge,

wherein the arithmetic unit executes, in the processing of detecting the edge, processing of selecting, according to a type of the edge to be detected, a machine learning model in which the facing image is used as input data and the edge in the facing image is used as output data, processing of detecting the edge in the facing image by inputting the facing image to the selected machine learning model, and processing of removing excessive detection of the edge and/or interpolating non-detection of the edge based on connectivity of the detected edge.

5. An object manufacturing method comprising:

an object manufacturing step; and

a measurement step of measuring a predetermined physical quantity at a predetermined position of an object using the measurement method according to any one of claims 1 to **3.**

6. An object quality control method comprising:

a measurement step of measuring a predetermined physical quantity at a predetermined position of an object using the measurement method according to any one of claims 1 to 3; and

a quality control step of performing quality control for the object from a measurement result of the predetermined physical quantity obtained by the measurement step.

7. An object manufacturing equipment comprising:

manufacturing equipment for manufacturing an object; and

the measurement apparatus according to claim 4 for measuring a predetermined physical quantity at a predetermined position of the object manufactured by the manufacturing equipment.

8. An arithmetic unit for measuring a predetermined physical quantity at a predetermined position of an object, the arithmetic unit executing:

processing of detecting an edge of the object from a facing image calculated from an image of the object captured together with a marker plate on which a pattern serving as a length reference for length measurement is drawn; and
processing of calculating the predetermined physical quantity based on the detected edge, and
in the processing of detecting the edge, executing:

a processing of selecting, according to a type of the edge to be detected, a machine learning model in which the facing image is used as input data and the edge in the facing image is used as output data;
processing of detecting the edge in the facing image by inputting the facing image to the selected machine learning model; and
processing of removing excessive detection of the edge and/or interpolating non-detection of the edge based on connectivity of the detected edge.

9. The arithmetic unit according to claim 8, wherein, in order to calculate the facing image from an image of the object, the arithmetic unit executes processing of transforming the image into a facing image having predetermined resolution using the pattern in the image.

10. An imaging terminal for measuring a predetermined physical quantity at a predetermined position of an object, the imaging terminal comprising:

an imaging unit that captures an image of the object together with a marker plate on which a pattern serving as a length reference for length measurement is drawn; and
a second arithmetic unit that executes processing on the captured image, wherein
the second arithmetic unit

executes processing of outputting the captured image to an external first arithmetic unit that is the arithmetic unit according to claim 8 or 9, and/or
is the arithmetic unit according to claim 8 or 9.

11. An imaging system for measuring a predetermined physical quantity at a predetermined position of an object, the imaging system comprising:

a marker plate on which a pattern serving as a length reference for length measurement is drawn; and
the imaging terminal according to claim 10 that captures an image of the object on which the marker plate is installed.

12. An information processing apparatus comprising a third arithmetic unit that executes, from a predetermined physical quantity at a predetermined position of an object calculated by an external first or second arithmetic unit that is the arithmetic unit according to claim 8 or 9 and a plurality of kinds of information concerning the object for which the physical quantity is calculated, one or more of processing of changing a manufacturing condition of the object and processing of determining a degree of quality of the object.

13. An object manufacturing equipment comprising:

manufacturing equipment for manufacturing an object; and
the imaging terminal according to claim 10 for measuring a predetermined physical quantity at a predetermined position of the object manufactured by the manufacturing equipment.

FIG.1

# FIG.2

PHYSICAL QUANTITY MEASUREMENT PROCESSING

S1
IMAGING PROCESSING

S2
PROJECTIVE TRANSFORMATION PROCESSING

S3
DETECTION PROCESSING

S4
MEASUREMENT PROCESSING

S5
DISPLAY PROCESSING

END

# FIG.3

IMAGING PROCESSING

S11
INSTALL MARKER PLATE

S12
ACQUIRE IMAGE

END

# FIG.4

```
        ┌─────────────────────┐
        │     PROJECTIVE      │
        │   TRANSFORMATION    │
        │     PROCESSING      │
        └──────────┬──────────┘
                   │                    ⌇S21
        ┌──────────▼──────────────────┐
        │  DETECT PATTERN POSITION     │
        │       COORDINATE             │
        └──────────┬───────────────────┘
                   │
                   ▼                    ⌇S22
              ╱─────────────╲
    NO      ╱   PROJECTION    ╲
◄──────────┤ TRANSFORMATION IS │
          ╲   POSSIBLE?       ╱
           ╲─────────────────╱
                   │ YES
                   ▼                    ⌇S23
        ┌──────────────────────────────┐
        │     ESTIMATE PARAMETERS      │
        └──────────┬───────────────────┘
                   │                    ⌇S24
        ┌──────────▼───────────────────┐
        │      TRANSFORM IMAGE         │
        └──────────┬───────────────────┘
                   ▼
        ┌──────────────────────────────┐
        │            END               │
        └──────────────────────────────┘
```

# FIG.5

FIG.6

# FIG.7

```
        ┌──────────────────┐
        │    DETECTION     │
        │   PROCESSING     │
        └────────┬─────────┘
                 │                    ⌇S31
    ┌────────────▼────────────────────────┐
    │  SELECT EDGE DETECTION MODEL         │
    └────────────┬────────────────────────┘
                 │                    ⌇S32
    ┌────────────▼────────────────────────┐
    │           DETECT EDGE                │
    └────────────┬────────────────────────┘
                 │                    ⌇S33
    ┌────────────▼────────────────────────┐
    │      EDGE IDENTIFICATION             │
    │         PROCESSING                   │
    └────────────┬────────────────────────┘
                 │
               ⌇S34
              ╱   ALL     ╲
   NO   ╱ EDGES DESIGNATED IN ╲
 ◄─────╲  ADVANCE HAVE BEEN  ╱
         ╲   DETECTED?     ╱
              ╲   │   ╱
               YES│
        ┌─────────▼────────┐
        │       END        │
        └──────────────────┘
```

FIG.8

EP 4 641 131 A1

# FIG.9

```
        ╭─────────────────╮
        │      EDGE       │
        │ IDENTIFICATION  │
        │   PROCESSING    │
        ╰─────────────────╯
                 │
                 ▼              ⌐S331
        ┌─────────────────┐
        │ BINARIZE EDGE IMAGE │
        └─────────────────┘
                 │
                 ▼              ⌐S332
        ┌─────────────────┐
        │ INITIALIZE EDGE y │
        │ COORDINATE VALID/INVALID │
        └─────────────────┘
                 │
                 ▼              ⌐S333
        ┌─────────────────┐
        │ EXTRACT DIVIDED BINARY │
        │      IMAGES     │
        └─────────────────┘
                 │
                 ▼              ⌐S334
        ┌─────────────────┐
        │ DETERMINE EDGE SHAPE │
        └─────────────────┘
                 │
                 ▼              ⌐S335
        ┌─────────────────┐
        │  CALCULATE EDGE │
        │   COORDINATE    │
        └─────────────────┘
                 │
                 ▼              ⌐S336
        ┌─────────────────┐
        │ DETERMINE VALID/INVALID │
        └─────────────────┘
                 │
                 ▼
            ◇ DIVIDED          ⌐S337
            BINARY IMAGE
            PROCESSING
   NO        HAS BEEN
  ◁────── COMPLETED FOR ALL
            x-COORDINATES
                 ?
                │YES          ⌐S339
     ⌐S338      ▼
  ┌─────────┐  ┌─────────────────┐
  │ x←x+1   │  │  INTERPOLATION  │
  └─────────┘  │   PROCESSING    │
               └─────────────────┘
                      │
                      ▼
                 ╭─────────╮
                 │   END   │
                 ╰─────────╯
```

# FIG.10

(a)

x

y

101

x=x1

x=x2

(b)

E1

E2

E3

# FIG.11

EP 4 641 131 A1

FIG.12

FIG.13

EP 4 641 131 A1

## FIG.14

FIG.15

101a

101b

VALID SECTION

INVALID SECTION

VALID
SECTION

INVALID SECTION

VALID SECTION

x

y

# FIG.16

(a)

(b)

(c)

(d)

(e)

(f)

EP 4 641 131 A1

# FIG.17

```
          START
            │
            ▼            ⌐S411
┌──────────────────────────┐
│  DETERMINE MEASUREMENT   │
│        POSITION          │
└──────────────────────────┘
            │
            ▼            ⌐S412
┌──────────────────────────┐
│  MEASURE PIPE THICKNESS  │
└──────────────────────────┘
            │
            ▼            ⌐S413
┌──────────────────────────┐
│         CORRECT          │
└──────────────────────────┘
            │
            ▼
           END
```

# FIG.18

```
          START
            │
            ▼            ⌐S421
┌──────────────────────────┐
│  DETERMINE MEASUREMENT   │
│        POSITION          │
└──────────────────────────┘
            │
            ▼            ⌐S422
┌──────────────────────────┐
│ CALCULATE DIAL GAUGE VALUE│
└──────────────────────────┘
            │
            ▼            ⌐S423
┌──────────────────────────┐
│         CORRECT          │
└──────────────────────────┘
            │
            ▼
           END
```

## FIG.19-1

```
                    START
                      │
                      ▼        ⌐S431
          CALCULATE MODEL PAPER SHAPE
                      │
                      ▼        ⌐S432
        DETERMINE MODEL PAPER POSITION
                      │
                      ▼        ⌐S433
               MEASURE GAP
                      │
                      ▼
                    END
```

## FIG.19-2

```
                    START
                      │
                      ▼        ⌐S431-2
          MEASUREMENT POSITION
           DETERMINATION STEP
                      │
                      ▼        ⌐S432-2
          VIRTUAL CIRCLE ARRANGEMENT
                  STEP
                      │
                      ▼        ⌐S433-2
          OUTER SURFACE PEAKING
           MEASUREMENT STEP
                      │
                      ▼
                    END
```

FIG.19-3

# FIG.20

```
        ┌─────────────┐
        │    START    │
        └──────┬──────┘
               │              ⌐S441
    ┌──────────▼──────────────┐
    │  DETERMINE MEASUREMENT  │
    │        POSITION         │
    └──────────┬──────────────┘
               │              ⌐S442
    ┌──────────▼──────────────┐
    │ DETERMINE TANGENTIAL LINE│
    └──────────┬──────────────┘
               │              ⌐S443
    ┌──────────▼──────────────┐
    │      MEASURE ANGLE      │
    └──────────┬──────────────┘
               │
        ┌──────▼──────┐
        │     END     │
        └─────────────┘
```

# FIG.21

# FIG.22

IMAGING TERMINAL ⌒6

20

IMAGING UNIT ⌒61

SECOND DISPLAY UNIT ⌒62

SECOND INPUT UNIT ⌒63

SECOND ARITHMETIC UNIT ⌒64

SECOND COMMUNICA-TION UNIT ⌒65

SECOND STORAGE UNIT ⌒66

8⌒⊗

INFORMATION PROCESSING APPARATUS ⌒7

FIRST DISPLAY UNIT ⌒71

FIRST INPUT UNIT ⌒72

FIRST ARITHMETIC UNIT ⌒73

FIRST COMMUNICA-TION UNIT ⌒74

FIRST STORAGE UNIT ⌒75

# FIG.23

IMAGING TERMINAL — 6

IMAGING UNIT — 61

SECOND DISPLAY UNIT — 62

SECOND INPUT UNIT — 63

SECOND ARITHMETIC UNIT — 64

SECOND COMMUNICA-TION UNIT — 65

SECOND STORAGE UNIT — 66

8

INFORMATION PROCESSING APPARATUS — 7

FIRST DISPLAY UNIT — 71

FIRST INPUT UNIT — 72

FIRST ARITHMETIC UNIT — 73

FIRST COMMUNICA-TION UNIT — 74

FIRST STORAGE UNIT — 75

EXTERNAL STORAGE APPARATUS — 9

# FIG.24

**PROCESSING OF IMAGING TERMINAL**

START

↓ S101

IMAGING PROCESSING

↓ S102

PROJECTIVE TRANSFORMATION PROCESSING

↓ S103

DETECTION PROCESSING

↓ S104

MEASUREMENT PROCESSING

↓ S105

DISPLAY PROCESSING

↓ S106

TRANSMISSION PROCESSING

↓

END

**PROCESSING OF INFORMATION PROCESSING APPARATUS**

START

↓ S201

RECEPTION PROCESSING

↓ S202

RECORDING PROCESSING

↓

END

# FIG.25

IMAGING TERMINAL  20  6

IMAGING UNIT  61

SECOND DISPLAY UNIT  62

SECOND INPUT UNIT  63

SECOND ARITHMETIC UNIT  64

SECOND COMMUNICA-TION UNIT  65

SECOND STORAGE UNIT  66

8

INFORMATION PROCESSING APPARATUS  7

FIRST ARITHMETIC UNIT  73

FIRST COMMUNICA-TION UNIT  74

FIRST STORAGE UNIT  75

1  10  10a  1c  10a

# FIG.26

| PROCESSING OF IMAGING TERMINAL | PROCESSING OF INFORMATION PROCESSING APPARATUS |
|---|---|
| START | START |
| S111 IMAGING PROCESSING | S211 RECEPTION PROCESSING |
| S112 TRANSMISSION PROCESSING | S212 PROJECTIVE TRANSFORMATION PROCESSING |
| | S213 DETECTION PROCESSING |
| | S214 MEASUREMENT PROCESSING |
| S113 RECEPTION PROCESSING | S215 TRANSMISSION PROCESSING |
| S114 DISPLAY PROCESSING | S216 RECORDING PROCESSING |
| END | END |

FIG.27

# FIG.28

**PROCESSING OF IMAGING TERMINAL**

START

S121
IMAGING PROCESSING

S122
TRANSMISSION PROCESSING

END

**PROCESSING OF INFORMATION PROCESSING APPARATUS**

START

S221
RECEPTION PROCESSING

S222
PROJECTIVE TRANSFORMATION PROCESSING

S223
DETECTION PROCESSING

S224
MEASUREMENT PROCESSING

S225
DISPLAY PROCESSING

S226
RECORDING PROCESSING

END

# FIG.29

**IMAGING TERMINAL** ~ 6

- IMAGING UNIT (61)
- SECOND DISPLAY UNIT (62)
- SECOND INPUT UNIT (63)
- SECOND ARITHMETIC UNIT (64)
  - SECOND COMMUNICATION UNIT (65)
- SECOND STORAGE UNIT (66)

20

**SECOND INFORMATION PROCESSING APPARATUS** ~ 207

- THIRD DISPLAY UNIT (271)
- THIRD INPUT UNIT (272)
- THIRD ARITHMETIC UNIT (273)
  - THIRD COMMUNICATION UNIT (274)
- THIRD STORAGE UNIT (275)

8

**FIRST INFORMATION PROCESSING APPARATUS** ~ 107

- FIRST DISPLAY UNIT (171)
- FIRST INPUT UNIT (172)
- FIRST ARITHMETIC UNIT (173)
  - FIRST COMMUNICATION UNIT (174)
- FIRST STORAGE UNIT (175)

EP 4 641 131 A1

# FIG.30

| PROCESSING OF FIRST INFORMATION PROCESSING APPARATUS | PROCESSING OF IMAGING TERMINAL | PROCESSING OF SECOND INFORMATION PROCESSING APPARATUS |
|---|---|---|

**PROCESSING OF IMAGING TERMINAL**

START

S131
IMAGING PROCESSING

S132
TRANSMISSION PROCESSING

S133
RECEPTION PROCESSING

S134
DISPLAY PROCESSING

END

**PROCESSING OF FIRST INFORMATION PROCESSING APPARATUS**

START

S231
RECEPTION PROCESSING

S232
PROJECTIVE TRANS-FORMATION PROCESSING

S233
DETECTION PROCESSING

S234
MEASUREMENT PROCESSING

S235
TRANSMISSION PROCESSING

S236
RECORDING PROCESSING

END

**PROCESSING OF SECOND INFORMATION PROCESSING APPARATUS**

START

S331
RECEPTION PROCESSING

S332
RECEPTION PROCESSING

S333
DETERMINATION PROCESSING

S334
TRANSMISSION PROCESSING

S335
RECORDING PROCESSING

END

# FIG.31

# FIG.32

## INTERNATIONAL SEARCH REPORT

| International application No. |
| --- |
| **PCT/JP2024/001839** |

**A. CLASSIFICATION OF SUBJECT MATTER**

*G01B 11/06*(2006.01)i; *G01B 11/02*(2006.01)i; *G01B 11/26*(2006.01)i
FI:   G01B11/06 H; G01B11/26 H; G01B11/02 H

According to International Patent Classification (IPC) or to both national classification and IPC

**B. FIELDS SEARCHED**

Minimum documentation searched (classification system followed by classification symbols)

G01B11/06; G01B11/02; G01B11/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2010-266202 A (ITT KK) 25 November 2010 (2010-11-25) <br> paragraphs [0018], [0033], [0036]-[0040] | 1-13 |
| A | JP 2013-156909 A (HITACHI PLANT TECHNOLOGIES, LTD.) 15 August 2013 (2013-08-15) <br> paragraph [0025] | 1-13 |
| A | JP 11-351842 A (EAST JAPAN RAILWAY CO.) 24 December 1999 (1999-12-24) <br> paragraph [0037] | 1-13 |
| A | JP 2013-130902 A (JVC KENWOOD CORP.) 04 July 2013 (2013-07-04) <br> paragraph [0011] | 1-13 |
| A | JP 2013-192101 A (PANASONIC CORPORATION) 26 September 2013 (2013-09-26) <br> paragraph [0044] | 1-13 |

☑ Further documents are listed in the continuation of Box C.    ☑ See patent family annex.

| | |
| --- | --- |
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **20 February 2024** | **12 March 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT

International application No.

**PCT/JP2024/001839**

### C.  DOCUMENTS CONSIDERED TO BE RELEVANT

| Category* | Citation of document, with indication, where appropriate, of the relevant passages | Relevant to claim No. |
|---|---|---|
| A | JP 2010-249650 A (MITSUBISHI HEAVY INDUSTRIES, LTD.) 04 November 2010 (2010-11-04)<br>    paragraph [0055], fig. 1 | 10-11, 13 |
| A | JP 2008-119711 A (NIPPON STEEL CORPORATION) 29 May 2008 (2008-05-29)<br>    paragraphs [0041]-[0042] | 12 |
| A | Microfilm of the specification and drawings annexed to the request of Japanese Utility Model Application No. 181318/1979 (Laid-open No. 99401/1981) (NKK CORP.) 05 August 1981 (1981-08-05), entire text, all drawings | 1-13 |

Form PCT/ISA/210 (second sheet) (July 2022)

**INTERNATIONAL SEARCH REPORT**
Information on patent family members

International application No.

**PCT/JP2024/001839**

| Patent document cited in search report | | | Publication date (day/month/year) | Patent family member(s) | Publication date (day/month/year) |
|---|---|---|---|---|---|
| JP | 2010-266202 | A | 25 November 2010 | (Family: none) | |
| JP | 2013-156909 | A | 15 August 2013 | (Family: none) | |
| JP | 11-351842 | A | 24 December 1999 | (Family: none) | |
| JP | 2013-130902 | A | 04 July 2013 | (Family: none) | |
| JP | 2013-192101 | A | 26 September 2013 | (Family: none) | |
| JP | 2010-249650 | A | 04 November 2010 | (Family: none) | |
| JP | 2008-119711 | A | 29 May 2008 | (Family: none) | |
| JP | 56-99401 | U1 | 05 August 1981 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- API SPECIFICATION 5L FORTY. AMERICAN PETROLEUM INSTITUTE, April 2018

- **XAVIER SORIA** ; **EDGAR RIBA** ; **ANGEL SAPPA**. Dense Extreme Inception Network: Towards a Robust CNN Model for Edge Detection. *The IEEE Winter Conference on Applications of Computer Vision*, 2020, vol. 1, 1912-1921